# EUROPEAN PATENT APPLICATION

(11) **EP 4 836 362 A1**
(43) Date of publication of application: **04.11.2026**
(21) Application number: 24916792.5
(22) Date of filing: 30.12.2024
(51) Int. Cl.: H04L 25/02

(54) **COMMUNICATION METHOD AND COMMUNICATION APPARATUS**

(30) Priority: 08.01.2024 CN 202410030025
(71) Applicant: Huawei Technologies Co., Ltd., Shenzhen, Guangdong 518129 (CN)
(72) Inventor: JIANG, Chenglong, Shenzhen, Guangdong 518129 (CN); BI, Xiaoyan, Shenzhen, Guangdong 518129 (CN)
(74) Representative: Huawei European IPR
(86) International application number: PCT/CN2024/144011
(87) International publication number: WO 2025/148745

(57) **Abstract**

A communication method and a communication apparatus are provided, which supports flexible changes in a quantity of ports for reference signals when RF channels are dynamically disabled. A network device sends, on a base reference signal resource, a reference signal to a terminal. The base reference signal resource may be used to transmit a reference signal of a maximum of M ports, and supports channel estimation for a maximum of K ports. The reference signal is a reference signal of m₁ ports of the M ports. The terminal may estimate, based on base channel estimation assistance information and the reference signal, a channel of k₁ ports of the K ports, and then determine and send CSI. In the method, m₁ is less than M, and k₁ is less than K and greater than or equal to mi. That is, by using the base channel estimation assistance information, the terminal can estimate, based on a reference signal of a small quantity of ports, a channel of a large quantity of ports. As a quantity of ports for reference signals sent over an air interface decreases, and port multiplexing is considered, air interface overhead introduced by the reference signals is reduced.

## Description

This application claims priority to Chinese Patent Application No. 202410030025.X, filed with the China National Intellectual Property Administration on January 8, 2024 and entitled "COMMUNICATION METHOD AND COMMUNICATION APPARATUS", which is incorporated herein by reference in its entirety.

### TECHNICAL FIELD

This application relates to the field of wireless communication, and in particular, to a communication method and a communication apparatus.

### BACKGROUND

In massive multiple-input multiple-output (massive multiple-input multiple-output, Massive MIMO) systems, using a large quantity of antennas can improve wireless capacity and coverage. To send and receive data, achieve system synchronization, and provide feedback on channel state information, channel estimation plays an increasingly critical role. Channel estimation is the process of reconstructing or restoring a received signal to compensate for signal distortion caused by channel fading and noise-induced attenuation . It leverages reference signals known in advance to both the transmitting end and receiving end to track channel changes in the time domain and frequency domain. These reference signals (reference signals, RSs) are also referred to as pilots (pilots). Currently, common reference signals include, for example, the channel state information reference signal (channel state information reference signal, CSI-RS) used to measure downlink channels, and the sounding reference signal (sounding reference signal, SRS) used to measure uplink channels.

In some scenarios, such as energy-saving scenarios, radio frequency (radio frequency, RF) channels may be dynamically disabled based on service requirements. This necessitates support for a large and dynamically changing quantity of antenna ports. However, when there are a large quantity of ports, current standards do not support dynamic changes in the quantity of ports when RF channels are dynamically disabled, resulting in limited flexibility.

### SUMMARY

This application provides a communication method and a communication apparatus, to enable flexible adjustment of a quantity of ports for reference signals, thereby supporting dynamic changes in a quantity of ports when RF channels are dynamically disabled.

According to a first aspect, a communication method is provided. The communication method may be applied to a communication apparatus. The communication apparatus may be, for example, a terminal device, may be a component (for example, a chip, a chip system, or a processor) configured in the terminal device, or may be a logical module, software, or the like that can implement all or some functions of the terminal device. This is not limited in this application.

For example, the method includes: receiving, on a first base reference signal resource, a first reference signal, where the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than M, M is less than or equal to K, and m₁, M, and K are positive integers; determining, based on the first reference signal and first channel estimation assistance information, first channel state information (channel state information, CSI), where the first CSI corresponds to a channel of k₁ ports, the first channel estimation assistance information is determined based on base channel estimation assistance information corresponding to the first base reference signal resource, the base channel estimation assistance information is used to estimate, based on a channel measurement result of the M ports, a channel of the K ports, the first channel estimation assistance information is used to estimate, based on a channel measurement result of the m₁ ports, the channel of the k₁ ports, the k₁ ports are from the K ports, and k₁ is a positive integer greater than or equal to m₁ and less than or equal to K; and sending the first CSI.

In conclusion, the following relationships may be obtained: k₁ ≤ K, m₁ < M, m₁ ≤ k₁, and M ≤ K.

It is not difficult to learn that there is a nesting relationship between the m₁ ports and the M ports, and between the k₁ ports and the K ports. The nesting relationship may be applied between the first channel estimation assistance information and the base channel estimation assistance information. Therefore, based on the nesting relationship, the first channel estimation assistance information may be obtained from the base channel estimation assistance information.

Based on the foregoing solution, a network device may flexibly select, based on the first base reference signal resource and service requirements, a reference signal of less than M ports to perform channel estimation. A terminal may obtain, based on the m₁ ports corresponding to the received first reference signal, the first channel estimation assistance information from the base channel estimation assistance information, and then estimate a channel of K or less than K ports. Therefore, flexible changes in a quantity of ports can be supported when RF channels are dynamically disabled. Because the quantity m₁ of ports for the first reference signal may be less than M, and M is less than or equal to K, a channel of a large quantity of ports may be estimated based on a reference signal of a small quantity of ports. As a quantity of ports for reference signals sent over an air interface decreases, and port multiplexing is considered, air interface overhead introduced by the reference signals is reduced.

It should be understood that, in this application, for ease of distinction and description, a base reference signal resource is defined as a time-frequency resource, to be distinguished from a spatial domain resource (for example, a port). In another implementation, the base reference signal resource may alternatively be defined as a resource in three dimensions: time domain, frequency domain, and spatial domain. In this case, a resource for transmitting the first reference signal may be a part or all of the first base reference signal resource. The foregoing method may also be described as follows:
receiving, on a first resource, a first reference signal, where the first resource is from a first base reference signal resource, the first resource includes k₁ ports, the first reference signal is a reference signal of m₁ ports of the k₁ ports, the first base reference signal resource includes K ports, the first base reference signal resource is used to transmit a reference signal of a maximum of M ports, the k₁ ports are from the K ports, the m₁ ports are from the M ports, the M ports are from the K ports, k₁ is greater than or equal to m₁ and less than or equal to K, M is greater than m₁ and less than or equal to K, and m₁, M, k₁, and K are positive integers; determining, based on the first reference signal and first channel estimation assistance information, first channel state information CSI, where the first CSI corresponds to a channel of the k₁ ports, the first channel estimation assistance information is determined based on base channel estimation assistance information corresponding to the first base reference signal resource, the base channel estimation assistance information is used to estimate, based on a channel measurement result of the M ports, a channel of the K ports, and the first channel estimation assistance information is used to estimate, based on a channel measurement result of the m₁ ports, the channel of the k₁ ports; and sending the first CSI.

In this specification, for ease of understanding and description, unless otherwise specified, a time-frequency resource is briefly referred to as a resource.

With reference to the first aspect, in some possible implementations of the first aspect, the method further includes: receiving first information. The first information indicates one or more of the following of each of T base reference signal resources: a resource pattern, a port pattern, a maximum quantity of ports supported for channel estimation, and base channel estimation assistance information. A *t*^{th} base reference signal resource of the T base reference signal resources is used to transmit a reference signal of a maximum of M*ₜ* ports. The reference signal transmitted using the *t*^{th} base reference signal resource supports channel estimation for a maximum of K*ₜ* ports. K*ₜ* is a maximum quantity of ports supported for channel estimation by the *t*^{th} base reference signal resource. M*ₜ* is a positive integer less than or equal to K*ₜ*. *t* is a positive integer from 1 to T. The resource pattern of the *t*^{th} base reference signal resource indicates a mapping relationship between a reference signal of each of the M*ₜ* ports and a time-frequency resource. The port pattern of the *t*^{th} base reference signal resource indicates indexes of the M*ₜ* ports in the K*ₜ* ports. The base channel estimation assistance information of the *t*^{th} base reference signal resource is used to estimate, based on a channel measurement result of the M*ₜ* ports, a channel of the K*ₜ* ports.

That is, the terminal may obtain, based on the first information, one or more of the following: a resource pattern, a port pattern, a maximum quantity of ports supported for channel estimation, and base channel estimation assistance information. The resource pattern may be used by the terminal to determine a time-frequency position at which the first reference signal is received. The port pattern may be used to determine indexes of the m₁ ports for the first reference signal in the M ports. The base channel estimation assistance information may be used by the terminal to determine the first channel estimation assistance information. The base channel estimation assistance information may be further used to determine a maximum quantity of ports supported for channel estimation by the first base reference signal resource.

All the foregoing items may be configured by the network device, or some of the foregoing items may be configured by the network device while the other items are determined by the terminal based on the items indicated by the network device, or all the foregoing items may be determined by the terminal, for example, based on prior information. This is not limited in this application.

Further, when the first information indicates the resource pattern and the port pattern of each base reference signal resource, indication, by the first information, of the resource pattern and the port pattern of the *t*^{th} base reference signal resource is indication of a matrix **P***ₜ* , satisfying: **P***ₜ=***P**_{port,*t*} ⊗**P**_{RE,*t*} , where **P**_{port,*t*} represents the port pattern of the *t*^{th} base reference signal resource, and **P**_{RE,*t*} represents the resource pattern of the *t*^{th} base reference signal resource.

In other words, both the port pattern and the resource pattern may be indicated by indicating the matrix **P***ₜ* . The matrix **P***ₜ* may be collectively referred to as a pattern.

With reference to the first aspect, in some possible implementations of the first aspect, T is greater than 1, and any two of the T base reference signal resources meet: Maximum quantities of ports for transmitting reference signals are different, and/or maximum quantities of ports supported for channel estimation are different.

When the maximum quantities of ports supported for channel estimation are consistent, a larger maximum quantity of ports for transmitting reference signals indicates more accurate channel estimation, and a smaller maximum quantity of ports for reference signals indicates more reduced air interface overhead. Therefore, appropriate base reference signal resources may be selected based on different service requirements.

Therefore, different service requirements can be met by configuring a plurality of base reference signal resources that satisfy the foregoing conditions.

With reference to the first aspect, in some possible implementations of the first aspect, the method further includes: receiving second information, where the second information indicates an identifier of the first base reference signal resource of the T base reference signal resources.

The identifier of the first base reference signal resource is indicated, so that the terminal determines a base reference signal resource actually used to transmit a reference signal.

With reference to the first aspect, in some possible implementations of the first aspect, the first CSI is a precoding matrix indicator (precoding matrix indicator, PMI) corresponding to the channel of the k₁ ports, or the first CSI is a channel estimation result that indicates the channel of the k₁ ports.

In this application, the channel estimation result is a result obtained from channel estimation, and indicates a channel, for example, the channel of the k₁ ports herein; and the PMI indicates a precoding matrix, for example, a precoding matrix corresponding to the channel of the k₁ ports herein. In the following, unless otherwise specified, both the channel estimation result and the PMI may be understood with reference to descriptions herein.

Whether the terminal indicates the PMI or the channel estimation result via the first CSI may be determined by the terminal, may be configured by the network device, or may be predefined in a protocol. This is not limited in this application.

With reference to the first aspect, in some possible implementations of the first aspect, the method further includes: determining, based on indexes of the m₁ ports in the M ports and indexes of the k₁ ports in the K ports, the first channel estimation assistance information from the base channel estimation assistance information corresponding to the first base reference signal resource.

The indexes of the m₁ ports in the M ports and the indexes of the k₁ ports in the K ports herein are an embodiment of the foregoing nesting relationship between the m₁ ports and the M ports, and between the k₁ ports and the K ports. Based on the nesting relationship, the terminal may determine the first channel estimation assistance information from base channel assistance information.

Optionally, the method further includes: receiving third information, where the third information indicates the indexes of the k₁ ports in the K ports.

The terminal may determine, based on the indexes indicated by the third information, a port for a channel requiring channel estimation.

Optionally, the method further includes: receiving fourth information, where the fourth information indicates the indexes of the m₁ ports in the M ports.

The terminal may obtain, based on the fourth information, the indexes of the m₁ ports in the M ports.

Optionally, the method further includes: receiving fourth information, where the fourth information indicates an extraction rule for extracting the m₁ ports from the M ports.

The terminal may determine, according to the extraction rule, the indexes of the m₁ ports in the M ports, thereby determining rows, which the first channel estimation assistance information is from, of the base channel estimation assistance information. Actually, the terminal does not necessarily determine, according to the extraction rule, the indexes of the m₁ ports in the M ports. The terminal may directly extract, according to the extraction rule, m₁ rows from the base channel estimation assistance information.

With reference to the first aspect, in some possible implementations of the first aspect, the method further includes: receiving, on the first base reference signal resource, a second reference signal, where the second reference signal is a reference signal of m₂ ports, the m₂ ports are from the m₁ ports, and m₂ is a positive integer less than or equal to m₁; determining, based on the second reference signal and second channel estimation assistance information, second CSI, where the second CSI corresponds to a channel of k₂ ports, the second channel estimation assistance information is used to estimate, based on a channel measurement result of the m₂ ports, the channel of the k₂ ports, the k₂ ports are from the k₁ ports, and k₂ is a positive integer less than or equal to k₁ and greater than or equal to m₂; and sending the second CSI.

In conclusion, the following relationships may be obtained: m₂ ≤ m₁, k₂ ≤ k₁, and k₂ ≥ m₂.

It is not difficult to learn that there is also a nesting relationship between the m₂ ports and the m₁ ports, and between the k₂ ports and the k₁ ports. The nesting relationship may be applied between the second channel estimation assistance information and the first channel estimation assistance information. Therefore, based on the nesting relationship, the second channel estimation assistance information may be obtained from the first channel estimation assistance information. In this way, computing overhead can be reduced, and execution efficiency can be improved. In addition, because there is the nesting relationship between the m₁ ports and the M ports, and between the k₁ ports and the K ports, there is also a nesting relationship between the m₂ ports and the M ports, and between the k₂ ports and the K ports. The nesting relationship may be applied between the second channel estimation assistance information and the base channel estimation assistance information. Therefore, based on the nesting relationship, the second channel estimation assistance information may alternatively be obtained from the base channel estimation assistance information. In this way, the terminal does not need to store the first channel estimation assistance information, thereby reducing storage overhead.

In addition, the network device may reuse a same base reference signal resource, for example, the first base reference signal resource, in a plurality of rounds of channel estimation. In this way, the network device does not need to indicate, via the second information, an actually used base reference signal resource before performing channel estimation each time, thereby reducing signaling overhead.

With reference to the first aspect, in some possible implementations of the first aspect, the method further includes: sending capability information of the terminal. The capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a port pattern, and a resource pattern that correspond to each allowed value of the maximum quantity of ports, or a retention duration supported by the terminal for related information of each round of channel estimation. The extraction rule is used for extracting some or all ports from a plurality of ports.

For example, the related information of each round of channel estimation includes but is not limited to channel estimation assistance information used in each round of channel estimation, such as the first channel estimation assistance information and the second channel estimation assistance information.

The terminal may report the capability information of the terminal to the network device, so that the network device can dynamically configure or adjust, for the terminal based on the capability information of the terminal, a base reference signal resource that matches a capability of the terminal, thereby successfully completing channel estimation and achieving high spectral efficiency.

According to a second aspect, a communication method is provided. The communication method may be applied to a communication apparatus. The communication apparatus may be, for example, a network device, may be a component (for example, a chip, a chip system, or a processor) configured in the network device, or may be a logical module, software, or the like that can implement all or some functions of the network device. This is not limited in this application.

For example, the method includes: sending, on a first base reference signal resource, a first reference signal, where the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than M, M is less than or equal to K, and m₁, M, and K are positive integers; and receiving first CSI, where the first CSI is obtained based on the first reference signal, the first CSI corresponds to a channel of k₁ ports, the k₁ ports are from the K ports, and k₁ is a positive integer greater than or equal to m₁ and less than or equal to K.

In conclusion, the following relationships may be obtained: k1 ≤ K, m1 < M, m1 ≤ k1, and M ≤ K. For relationships between the m₁ ports and the M ports, between the k₁ ports and the K ports, and between first channel estimation assistance information and base channel estimation assistance information, refer to related descriptions in the first aspect. Details are not described again.

Based on the foregoing solution, the network device may flexibly select, based on the base reference signal resource and service requirements, a reference signal of M or less than M ports to perform channel estimation. A terminal may obtain, based on a port for a received reference signal, the first channel estimation assistance information from the base channel estimation assistance information, and then estimate a channel of K or less than K ports. Therefore, flexible changes in a quantity of ports can be supported when RF channels are dynamically disabled. Because the quantity m₁ of ports for the first reference signal may be less than M, and M is less than or equal to K, a channel of a large quantity of ports may be estimated based on a reference signal of a small quantity of ports. As a quantity of ports for reference signals sent over an air interface decreases, and port multiplexing is considered, air interface overhead introduced by the reference signals is reduced.

It should be understood that, in this application, for ease of distinction and description, a base reference signal resource is defined as a time-frequency resource, to be distinguished from a spatial domain resource (for example, a port). In another implementation, the base reference signal resource may alternatively be defined as a resource in three dimensions: time domain, frequency domain, and spatial domain. In this case, a resource for transmitting the first reference signal may be a part or all of the first base reference signal resource. The foregoing method may also be described as follows:
sending, on a first resource, a first reference signal, where the first resource is from a first base reference signal resource, the first resource includes k₁ ports, the first reference signal is a reference signal of m₁ ports of the k₁ ports, the first base reference signal resource includes K ports, the first base reference signal resource is used to transmit a reference signal of a maximum of M ports, the k₁ ports are from the K ports, the m₁ ports are from the M ports, the M ports are from the K ports, k₁ is greater than or equal to m₁ and less than or equal to K, M is greater than m₁ and less than or equal to K, and m₁, M, k₁, and K are positive integers; and receive first CSI, where the first CSI is obtained based on the first reference signal, and the first CSI corresponds to the channel of the k₁ ports.

With reference to the second aspect, in some possible implementations of the second aspect, the method further includes: sending first information. The first information indicates one or more of the following of each of T base reference signal resources: a resource pattern, a maximum quantity of ports supported for channel estimation, and base channel estimation assistance information. A *t*^{th} base reference signal resource of the T base reference signal resources is used to transmit a reference signal of a maximum of M*ₜ* ports. The reference signal of the M*ₜ* ports supports channel estimation for a maximum of K*ₜ* ports. K*ₜ* is a maximum quantity of ports supported for channel estimation by the *t*^{th} base reference signal resource. M*ₜ* is a positive integer less than or equal to K*ₜ*. *t* is a positive integer from 1 to T. The resource pattern of the *t*^{th} base reference signal resource indicates a mapping relationship between a reference signal of each of the M*ₜ* ports and a time-frequency resource. The base channel estimation assistance information of the *t*^{th} base reference signal resource is used to estimate, based on a channel measurement result of the M*ₜ* ports, a channel of the K*ₜ* ports.

With reference to the second aspect, in some possible implementations of the second aspect, when the first information indicates the resource pattern and a port pattern of each base reference signal resource, indication, by the first information, of the resource pattern and the port pattern of the *t*^{th} base reference signal resource is indication of a matrix **P***ₜ* , satisfying: **P***ₜ=***P**_{port,*t*} ⊗**P**_{RE,*t*} , where **P**_{port,*t*} represents the port pattern of the *t*^{th} base reference signal resource, and **P**_{RE,*t*} represents the resource pattern of the *t*^{th} base reference signal resource.

With reference to the second aspect, in some possible implementations of the second aspect, T is greater than 1, and at least two of the T base reference signal resources satisfy: Maximum quantities of ports for transmitting reference signals are different, and/or maximum quantities of ports supported for channel estimation are different.

With reference to the second aspect, in some possible implementations of the second aspect, the method further includes: sending second information, where the second information indicates an identifier of the first base reference signal resource of the T base reference signal resources.

With reference to the second aspect, in some possible implementations of the second aspect, the first CSI is a PMI corresponding to the channel of the k₁ ports, or the first CSI is a channel estimation result that indicates the channel of the k₁ ports.

With reference to the second aspect, in some possible implementations of the second aspect, the method further includes: sending third information, where the third information indicates indexes of the k₁ ports in the K ports.

With reference to the second aspect, in some possible implementations of the second aspect, the method further includes: sending fourth information, where the fourth information indicates indexes of the m₁ ports in the M ports, or an extraction rule for extracting the m₁ ports from the M ports.

With reference to the second aspect, in some possible implementations of the second aspect, the method further includes: sending, on the first base reference signal resource, a second reference signal, where the second reference signal is a reference signal of m₂ ports, the m₂ ports are from the m₁ ports, and m₂ is a positive integer less than or equal to m₁; and receiving second CSI, where the second CSI is obtained based on the second reference signal, the second CSI corresponds to a channel of k₂ ports, the k₁ ports are from the k₁ ports, and k₂ is a positive integer less than or equal to k₁ and greater than or equal to m₂.

With reference to the second aspect, in some possible implementations of the second aspect, the method further includes: receiving capability information of the terminal. The capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a resource pattern, and a port pattern that correspond to each allowed value of the maximum quantity of ports, or a retention duration supported by the terminal for related information of each round of channel estimation. The extraction rule is used for extracting some or all ports from a plurality of ports.

For specific content of the possible implementations of the second aspect, refer to related descriptions in the first aspect. Details are not described herein again.

According to a third aspect, this application provides a communication apparatus, including a module or a unit configured to implement the method according to any one of the first aspect and the possible implementations of the first aspect. Each module or unit may implement a corresponding function by executing a computer program.

According to a fourth aspect, this application provides a communication apparatus, including a processor. The processor is configured to perform the communication method according to any one of the first aspect and the possible implementations of the first aspect.

The apparatus may further include a memory configured to store instructions and data. The memory is coupled to the processor, and when executing the instructions stored in the memory, the processor may implement the method described in the foregoing aspects. The apparatus may further include a communication interface. The communication interface is used by the apparatus to communicate with another device. For example, the communication interface may be a transceiver, a circuit, a bus, a module, or another type of communication interface.

For example, the apparatus in the third aspect or the fourth aspect is a terminal device, or a component in the terminal device, for example, a chip, a chip system, or a processor.

According to a fifth aspect, this application provides a chip system. The chip system includes at least one processor, configured to support implementation of a function according to any one of the first aspect and the possible implementations of the first aspect, for example, receiving or processing information in the foregoing method.

In a possible design, the chip system further includes a memory, the memory is configured to store program instructions and data, and the memory is located inside or outside the processor.

The chip system may include a chip, or may include a chip and another discrete device.

According to a sixth aspect, this application provides a communication apparatus, including a module or a unit configured to implement the method according to any one of the second aspect and the possible implementations of the second aspect. Each module or unit may implement a corresponding function by executing a computer program.

According to a seventh aspect, this application provides a communication apparatus, including a processor. The processor is configured to perform the communication method according to any one of the second aspect and the possible implementations of the second aspect.

The apparatus may further include a memory configured to store instructions and data. The memory is coupled to the processor, and when executing the instructions stored in the memory, the processor may implement the method described in the foregoing aspects. The apparatus may further include a communication interface. The communication interface is used by the apparatus to communicate with another device. For example, the communication interface may be a transceiver, a circuit, a bus, a module, or another type of communication interface.

For example, the apparatus in the sixth aspect or the seventh aspect is a network device, or a component in the network device, for example, a chip, a chip system, or a processor.

According to an eighth aspect, this application provides a chip system. The chip system includes at least one processor, configured to support implementation of a function according to any one of the second aspect and the possible implementations of the second aspect, for example, receiving or processing information in the foregoing method.

In a possible design, the chip system further includes a memory, the memory is configured to store program instructions and data, and the memory is located inside or outside the processor.

The chip system may include a chip, or may include a chip and another discrete component.

According to a ninth aspect, this application provides a computer-readable storage medium, including a computer program. When the computer program is run on a computer, the computer is caused to implement the method according to any one of the first aspect or the second aspect and the possible implementations of the first aspect or the second aspect.

According to a tenth aspect, this application provides a computer program product. The computer program product includes a computer program (also referred to as code or instructions). When the computer program is run, a computer is caused to perform the method according to any one of the first aspect or the second aspect and the possible implementations of the first aspect or the second aspect.

According to an eleventh aspect, an embodiment of this application provides a communication system, including the foregoing terminal and network device.

The technical solutions of the third aspect to the eleventh aspect of this application correspond to the technical solutions of the first aspect and the second aspect of this application, and beneficial effect achieved in the aspects and corresponding feasible implementations are similar. Details are not described again.

### BRIEF DESCRIPTION OF DRAWINGS

FIG. 1 is a diagram of an architecture of a communication system to which a communication method provided in this application is applicable;
FIG. 2 is a diagram in which air interface overhead of a CSI-RS changes with a quantity of ports;
FIG. 3 is a diagram of channel estimation assistance information according to this application;
FIG. 4 is a schematic flowchart of a communication method according to an embodiment of this application;
FIG. 5a and FIG. 5b are diagrams of determining first channel estimation assistance information by a terminal according to an embodiment of this application;
FIG. 6 is a diagram of base channel estimation assistance information and first channel estimation assistance information according to an embodiment of this application;
FIG. 7 is a diagram of a channel of m1 ports measured by a terminal and a channel of k1 ports estimated by the terminal according to an embodiment of this application;
FIG. 8 is a diagram of a channel of m2 ports measured by a terminal and a channel of k2 ports estimated by the terminal according to an embodiment of this application;
FIG. 9 is a block diagram of a communication apparatus according to an embodiment of this application;
FIG. 10 is another block diagram of a communication apparatus according to an embodiment of this application;
FIG. 11 is a diagram of a structure of a terminal according to an embodiment of this application; and
FIG. 12 is a diagram of a structure of a network device according to an embodiment of this application.

### DESCRIPTION OF EMBODIMENTS

The following describes technical solutions of this application with reference to the accompanying drawings.

For ease of understanding of embodiments of this application, the following several descriptions are first provided.

First, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, pre-stored, pre-sintered, or preconfigured. Alternatively, indicating information A may be performed by using information B and a preset rule.

Second, in this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

Third, in this application, "at least one" indicates one or more, "a plurality of" indicates two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in embodiments of this application, prefix words such as "first" and "second" are merely used for distinguishing and describing different things belonging to a same name category, and are not intended to limit a sequence, sizes, or a quantity of things. For example, "first information" and "second information" are merely different information, and have no time sequence relationship, magnitude relationship, or priority relationship.

Fifth, "sending" and "receiving" in this application indicate a signal transmission direction. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of the chip interface.

In other words, sending and receiving may be performed between devices, for example, between a terminal and a network device; or sending or receiving may be performed inside a device, for example, between components, modules, chips, software modules, or hardware modules inside the device through a bus, a cable, or an interface.

Sixth, in embodiments of this application, both "when" and "if" mean that an apparatus performs corresponding processing in an objective situation, are not intended to limit time, do not require the apparatus to necessarily have a determining action during implementation, and do not mean another limitation.

Seventh, in this application, a word such as "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Specifically, use of the word "example", "for example", "such as", or "like" is intended to present a relative concept in a specific manner.

Eighth, in this specification, a CSI-RS is used as an example of a reference signal to describe the method provided in this application. However, this should not constitute a limitation on a scenario to which this solution is applicable. This solution is also applicable to another downlink reference signal or uplink reference signal, for example, an SRS or a demodulation reference signal (demodulation reference signal, DMRS). A person skilled in the art may obtain, by making simple variations based on a same concept, solutions in which the solution provided in this application is applied to other reference signals. For brevity, the solutions are not listed herein.

Ninth, in this specification, for ease of description, various pieces of information are represented by matrices. For example, a channel may be represented by a matrix **H**, a resource pattern may be represented by a matrix **P**_{RE}, a port pattern may be represented by a matrix **P**ₚₒᵣₜ, and base channel estimation assistance information may be represented by a matrix **P**⁺. Further examples are not listed. It should be understood that the matrix is merely a possible mathematical representation of the information, and should not constitute any limitation on this application. For example, the information may alternatively be represented by vectors, arrays, or other forms, and matrix operations may be correspondingly converted into operations in other forms, such as vector operations. This is not limited in this application.

Tenth, in this specification, for ease of distinction and description, a time-frequency resource is briefly referred to as a resource, to be distinguished from a spatial domain resource (for example, a port). For example, that a base reference signal resource is used to transmit a reference signal of one or more ports may specifically mean that a time-frequency resource occupied by the reference signal of one or more ports is a base reference signal resource. In the following, unless otherwise specified, the base reference signal resource is understood as a time-frequency resource.

In another implementation, a resource may alternatively be defined as a resource in three dimensions: time domain, frequency domain, and spatial domain. For example, the base reference signal resource includes not only a time-frequency resource, but also a spatial domain resource. A person skilled in the art may make simple variations based on the method provided in this application, to obtain other possible solutions, and these solutions shall fall within the protection scope of this application.

Eleventh, for ease of description, in this specification, indexes or identifiers may be consecutively numbered starting from 1. For example, T base reference signal resources include a first base reference signal resource to a T^{th} base reference signal resource. Certainly, specific implementation is not limited thereto. For example, consecutive numbering may start from 0. In this case, the T base reference signal resources include a 0^{th} base reference signal resource to a (T - 1)^{th} base reference signal resource.

Twelfth, channel estimation is a process of reconstructing or restoring a received signal to compensate for signal distortion caused by channel fading and noise-induced attenuation. It leverages reference signals known in advance to both a transmitting end and a receiving end to track channel changes in time domain and frequency domain. In this specification, the reference signal is, for example, a CSI-RS. A transmitting end of the CSI-RS may be a network device, and a receiving end of the CSI-RS may be a terminal. For ease of description, in the following, a process from sending, by the network device, a reference signal (for example, a CSI-RS) to feeding back, by the terminal based on the received reference signal, CSI is referred to as one round of channel estimation.

Certainly, the reference signal may alternatively be another reference signal, for example, an SRS. In this case, a transmitting end of the SRS may be a terminal, and a receiving end of the SRS may be a network device. A process from sending, by the terminal, a reference signal (for example, an SRS) to feeding back, by the network device based on the received reference signal, CSI is also referred to as one round of channel estimation.

Thirteenth, this application relates to a channel estimation result and a channel measurement result. The channel measurement result is a channel obtained by measuring a reference signal. For example, a channel of m₁ ports may be obtained by measuring a reference signal of m₁ ports. The channel estimation result is a channel estimated based on a channel measurement result, usually a channel of more ports. For example, a channel of k₁ (k₁ ≥ m₁) ports is estimated based on a channel (or a channel measurement result) of m₁ ports.

In addition, for ease of understanding and description, content indicated by CSI is distinguished and named using a channel measurement result, a channel estimation result, and a PMI. A difference between the channel measurement result and the channel estimation result is described above, and details are not described again. The PMI indicates a precoding matrix, for example, a precoding matrix corresponding to a channel of k₁ ports.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a fifth generation (5th generation, 5G) mobile communication system, or a new radio access technology (new radio access technology, NR). The 5G mobile communication system may include non-standalone (non-standalone, NSA) networking and/or standalone (standalone, SA) networking. The technical solutions provided in this application may be further applied to a future communication system, for example, a 6th generation (6th generation, 6G) mobile communication system. This is not limited in this application.

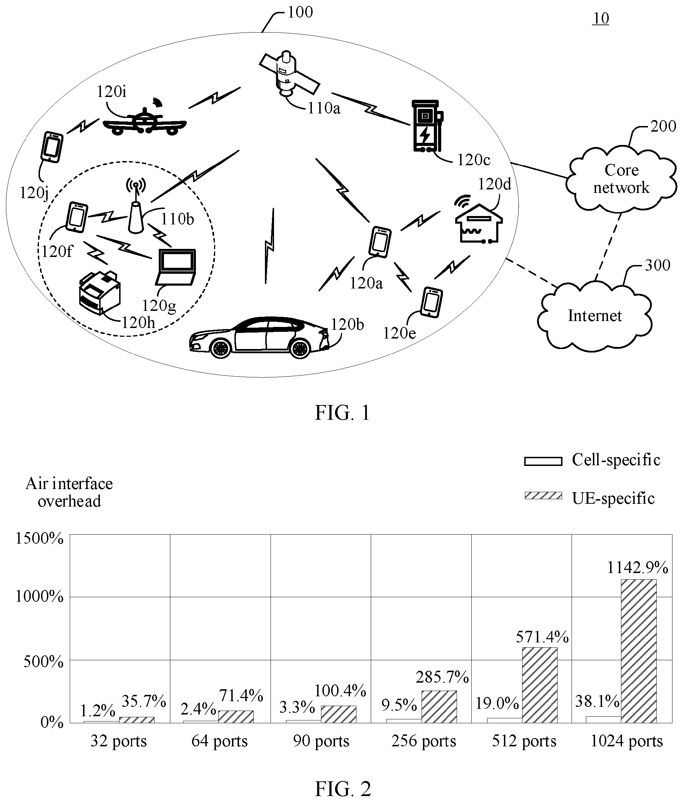

FIG. 1 is a diagram of an architecture of a communication system to which a communication method provided in this application is applicable. FIG. 1 is a diagram of a possible and non-limiting system architecture. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 sometimes may also be referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wearables, smart transportation, a smart city, or the like. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like.

In embodiments of this application, the terminal and the network device may be hardware devices, or may be software functions running on dedicated hardware or software functions running on general-purpose hardware, for example, virtualized functions instantiated on a platform (for example, a cloud platform), or may be entities including dedicated or general-purpose hardware devices and software functions. Specific forms of the terminal and the network device are not limited in this application.

Wireless communication systems have undergone evolution and research from the first generation analog communication to 5G NR and existing 6G technologies. In this complex evolution process, high throughput and massive connectivity have remained core challenges for wireless communication networks. In a plurality of 5G NR and 6G solutions, a massive MIMO technology that can significantly improve a system capacity is still used as a key technology to satisfy requirements for high-rate transmission. In the technology, an array gain, multiplexing and diversity gains, and an interference cancellation gain in space can be obtained for a signal by using a resource in a spatial dimension without increasing system bandwidth, exponentially improving a capacity and spectral efficiency of a communication system.

In massive MIMO, using a large quantity of antennas can improve wireless capacity and coverage. To ensure system performance, both a transmitting end and a receiving end may perform channel estimation, channel measurement, and the like via a reference signal. As a quantity of antennas increases, air interface overhead introduced by a reference signal also increases dramatically.

A CSI-RS is used as an example. In Release 15 (Release 15, R15) of the 3rd generation partnership project (3rd generation partnership project, 3GPP) standard, quantities of ports supported for the CSI-RS include {1, 2, 4, 8, 12, 16, 24, 32}, and a mapping relationship between a reference signal of each port and a time-frequency resource may be defined by a resource pattern (pattern). A group of time-frequency resources may be multiplexed for CSI-RSs of a plurality of ports in a code division, frequency division, or time division manner. In Release 19 (Release 19), it is considered to extend a maximum quantity of ports supported for the CSI-RS to 64. It can be learned that as a quantity of ports increases, air interface resource also increase.

FIG. 2 is a diagram in which air interface overhead of a CSI-RS changes with a quantity of ports. In FIG. 2, it is assumed that a frequency domain density of the CSI-RS is 0.5 RE/port/RB, a duration is 10 transmission time intervals (transmission time interval, TTI), an uplink-downlink subframe ratio is 1:4, a quantity of UEs is 30, and the air interface overhead increases dramatically as the quantity of ports for the CSI-RS increases. As shown in the figure, when the quantity of ports for the CSI-RS is 32, the air interface overhead is as follows: cell-specific (cell-specific) overhead accounts for 1.2%, and UE-specific (UE-specific) overhead accounts for 35.7%; when the quantity of ports for the CSI-RS increases to 64, the air interface overhead is as follows: cell-specific overhead accounts for 2.4%, and UE-specific overhead accounts for 71.4%; and when the quantity of ports for the CSI-RS increases to 90, the air interface overhead is as follows: cell-specific overhead accounts for 3.3%, and UE-specific overhead accounts for 100.4%. It can be learned that, to achieve a larger quantity of ports (for example, 128/256/512/1024/...) for the CSI-RS, the air interface overhead increases dramatically, making a conventional evolution path unsustainable.

In addition, in some scenarios, such as energy-saving scenarios, RF channels may be dynamically disabled based on service requirements. This necessitates support for a large and dynamically changing quantity of antenna ports. However, when there are a large quantity of ports, current standards do not support dynamic changes in the quantity of ports when RF channels are dynamically disabled, resulting in limited flexibility.

In view of this, this application provides a method, which can enable flexible adjustment of ports for reference signals and a quantity of the ports based on requirements. In the method, a base reference signal resource and corresponding channel estimation assistance information are defined. A network device may transmit a reference signal of a small quantity of ports (for example, a maximum of M ports) by using the base reference signal resource, and a terminal may estimate, based on the channel estimation assistance information, a channel of a large quantity of ports (for example, a maximum of K ports, where K ≥ M). In this way, the network device may flexibly select, based on the base reference signal resource and service requirements, a reference signal of any quantity of ports of the M ports to perform channel estimation, to estimate a channel of any quantity of ports of the K ports, thereby supporting flexible changes in a quantity of ports when RF channels are dynamically disabled. In addition, because a quantity of ports for reference signals may be less than or equal to M, that is, is not limited to M, the quantity of ports may be reduced based on service requirements, and air interface resource overhead of the reference signal is reduced accordingly. In addition, because the base reference signal resource is preconfigured, the network device does not need to adjust a time-frequency resource for transmitting the reference signal when reducing the quantity of ports for the reference signal. Therefore, there is no need to configure, for the terminal, the time-frequency resource for transmitting the reference signal each time the reference signal is sent, thereby avoiding high signaling overhead introduced by resource configuration.

The following describes in detail the method provided in this application with reference to the accompanying drawings.

To better understand the method provided in embodiments of this application, the following briefly describes terms in this application.
1. Antenna port: a logical concept that may be briefly referred to as a port. There is no direct correspondence between one antenna port and one physical antenna. The antenna port is usually associated with a reference signal, and the antenna port may be understood as a transceiver interface on a channel through which the reference signal passes. For a low-frequency system, one antenna port may correspond to one or more antenna array elements. The array elements jointly send a reference signal. A receiving end may consider the array elements as a whole, and does not need to distinguish between the array elements. For a high-frequency system, an antenna port may correspond to one beam. Similarly, a receiving end only needs to consider the beam as an interface, and does not need to distinguish between array elements.
2. Channel estimation assistance information: information that may be used to assist channel estimation. In this application, the channel estimation assistance information may be used to assist a terminal in estimating, based on a reference signal of a small quantity of ports, a channel of a large quantity of ports.

The channel estimation assistance information may be obtained based on a channel. For example, a channel is denoted as a matrix **H**, and the matrix **H** may be referred to as a channel matrix. For each receive port, the channel matrix **H** includes N_{TX} columns, where N_{TX} represents a quantity of transmit ports, namely, a quantity of ports for reference signals. For example, the channel matrix **H** has dimensions of N_{RE} × N_{TX}, where N_{RE} represents a quantity of REs for transmitting reference signals. The channel may be obtained based on prior information. The channel may be, for example, a downlink channel obtained by estimating an uplink channel based on uplink-downlink reciprocity, may be a channel in a historical time period, or may be a channel predicted by an artificial intelligence (artificial intelligence, AI) model. This is not limited in this application.

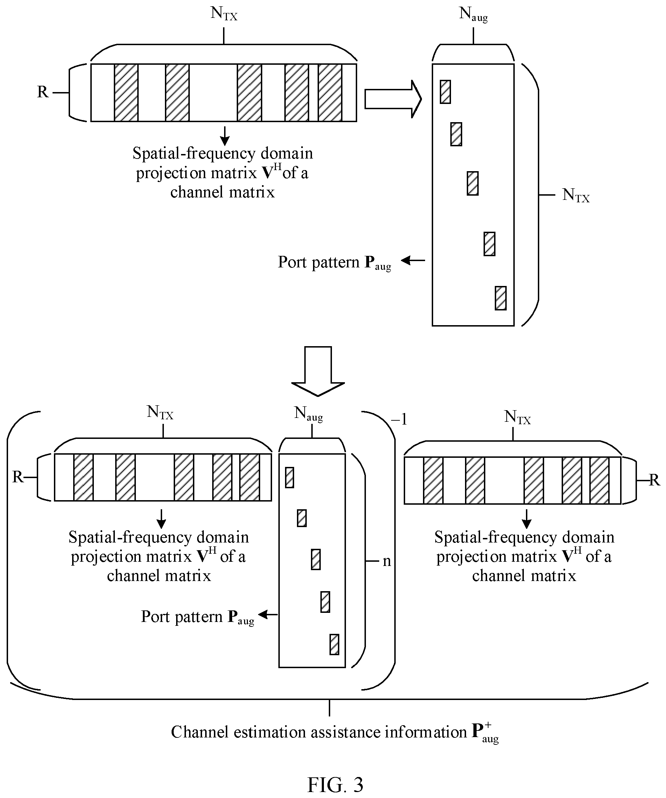

FIG. 3 shows an example of channel estimation assistance information. For example, singular value decomposition (singular value decomposition, SVD) is performed on the channel matrix **H** to obtain a spatial domain projection matrix **V**^{H} of the channel. The matrix **V**^{H} has dimensions of R × N_{TX}, that is, includes N_{TX} column vectors, where each column vector is a spatial domain basis vector corresponding to one of N_{TX} ports. The matrix **V**^{H} is a matrix formed by R row vectors in a right unitary matrix that is obtained by performing SVD on the channel matrix **H**, where R is a rank (rank) of the channel. However, this application is not limited thereto. Alternatively, the matrix **V**^{H} may be formed by N_{TX} codewords that are determined from a predefined codebook based on prior information, and each of the N_{TX} codewords is a spatial domain basis vector corresponding to one of the N_{TX} ports.

A maximal linearly independent set of column vectors is obtained from the matrix **V**^{H}. The maximal linearly independent set includes, for example, R column vectors. Considering a specific amount of redundancy, N_{aug} (N_{aug} is an integer greater than or equal to R) column vectors may be selected from the matrix **V**^{H}, and the N_{aug} column vectors include the R column vectors (namely, the maximal linearly independent set). The subscript aug in N_{aug} represents augmented (augmented). A matrix **P**_{aug} may be obtained based on positions of the N_{aug} column vectors in the **V**^{H}. The matrix **P**_{aug} has dimensions of N_{TX} × N_{aug}, where N_{aug} is a positive integer less than or equal to N_{TX}. As shown in the figure, in each row of the matrix **P**_{aug}, a quantity of non-zero elements (for example, "1") does not exceed 1, and in each column of the matrix **P**_{aug}, a quantity of non-zero elements (for example, "1") is 1. The matrix **P**_{aug} includes N_{aug} non-zero elements (for example, "1"), where each non-zero element is located in one column of the matrix **P**_{aug}, and all other elements are zero. This indicates that N_{aug} important ports are selected from the N_{TX} ports to send a reference signal. Positions of the N_{aug} non-zero elements in respective columns of the matrix **P**_{aug} correspond to the positions of the N_{aug} columns in the **V**^{H}, and may indicate indexes of the N_{aug} ports in the N_{TX} ports. Therefore, the matrix **P**_{aug} may also be referred to as a matrix indicating a port pattern of a reference signal.

Channel estimation assistance information **P**⁺ may be obtained based on the matrix **V**^{H} and the matrix **P**_{aug}. The **P**⁺ satisfies: (**V**^{H}**P**_{aug})⁻¹**V**^{H}, and has dimensions of N_{aug} × N_{TX}. One column vector in the **P**⁺ is channel estimation assistance sub-information corresponding to one of the N_{TX} ports. Based on the channel estimation assistance sub-information, a network device may send reference signals through the N_{aug} ports corresponding to N_{aug} spatial domain basis vectors of the maximal linearly independent set. The terminal estimates, based on the channel estimation assistance information **P**⁺ and the reference signals received from the N_{aug} ports, a channel of the N_{TX} ports.

Specifically, the reference signals received by the terminal are reference signals sent by the network device through the N_{aug} ports. Therefore, the reference signals received by the terminal are reference signals that pass through a channel corresponding to the N_{aug} ports. The terminal may measure, based on a reference signal, a channel **H** ' . The **H** ' satisfies: **H** ' = **H** · **P**_{aug} . The **H** ' has dimensions of N_{TX} × N_{aug}. Then, the channel **H** ' may be multiplied by the channel estimation assistance information **P**⁺ , to obtain an estimated value **Ĥ** of the channel of the N_{TX} ports. The **Ĥ** satisfies: **Ĥ** = **H**·**P**_{aug}·**P**⁺ = **H**·**P**aug·(**V**^{H}·**P**_{aug})⁻¹**V**^{H}.

It is not difficult to learn that, although a quantity N_{aug} of ports for sending reference signals may be less than or equal to N_{TX}, because the N_{aug} ports are obtained by computing the maximal linearly independent set of the **V**^{H}, a remaining port is correlated with at least one of the N_{aug} ports, and a channel of another port may be estimated based on the N_{aug} ports. The channel estimation assistance information **P**⁺ satisfies: (**V**^{H}**P**_{aug})⁻¹**V**^{H}, which is analogous to performing a matrix division operation on the **V**^{H}. When performing channel estimation, the terminal multiplies a measured channel (namely, **HP**_{aug}) by the channel estimation assistance information **P**⁺, obtaining: **HP**_{aug}(**V**^{H}**P**_{aug})⁻¹**V**^{H}. Therefore, the channel matrix **H** corresponding to the **V**^{H} may be obtained, that is, the channel of the N_{TX} ports may be reconstructed.

It should be understood that the foregoing method for channel estimation based on the channel estimation assistance information is a method for channel estimation based on a sparse theory.

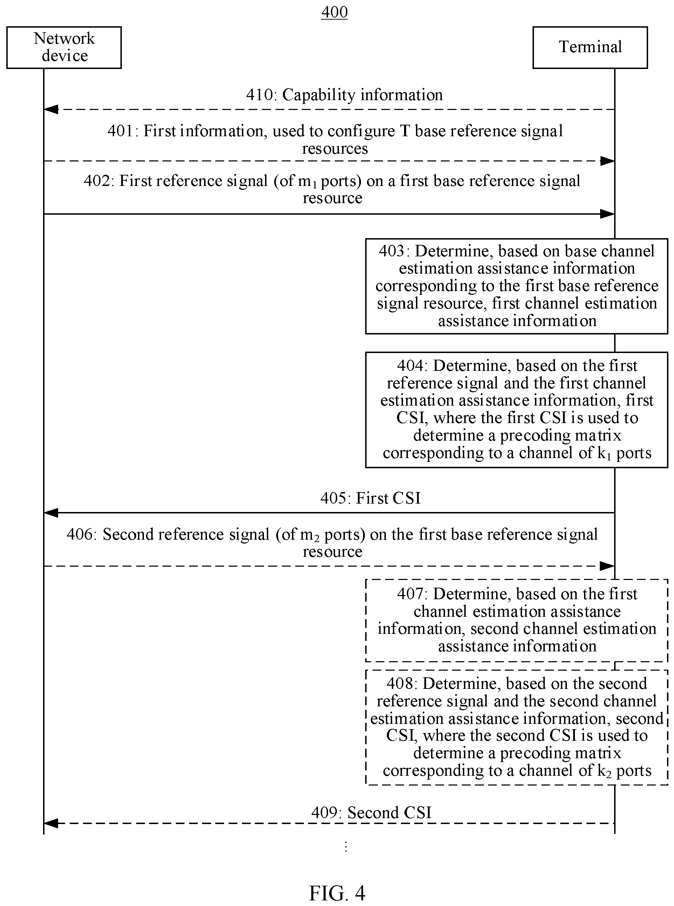

FIG. 4 is a schematic flowchart of a communication method according to an embodiment of this application. FIG. 4 describes the method by using interaction between a network device and a terminal as an example. The network device in FIG. 4 may alternatively be replaced with a component (for example, a chip, a chip system, or a processor) configured in the network device, or a logical module, software, or the like that can implement all or some functions of the network device. The terminal may be replaced with a component (for example, a chip, a chip system, or a processor) configured in the terminal, or a logical module, software, or the like that can implement all or some functions of the terminal.

The communication method 400 shown in FIG. 4 includes step 401 to step 410. The following describes in detail the steps in the method 400.

In step 401, the network device sends first information to the terminal, where the first information is used to configure T base reference signal resources. Correspondingly, the terminal receives the first information from the network device.

For example, in a RAN in which a CU, a DU, and an RU are deployed, a specific implementation of step 401 may be: A CU-CP generates first information, and sends the first information to the terminal by using the DU and the RU. In an ORAN, a specific implementation of step 401 may be: An O-CU-CP generates first information, and sends the first information to the terminal by using an O-DU and an O-RU.

In this embodiment, T may be a positive integer greater than or equal to 1. In other words, the first information may be used to configure one or more base reference signal resources.

For ease of understanding, the following describes the base reference signal resource by using a *t*^{th} base reference signal resource as an example. It should be understood that the *t*^{th} base reference signal resource may be one of the at least one base reference signal resource, and t may be any integer from 1 to T. The *t*^{th} base reference signal resource may be used to transmit a reference signal of a maximum of M*ₜ* ports. In other words, a quantity of ports for reference signals transmitted using the *t*^{th} base reference signal resource may be less than or equal to M*ₜ*. In addition, the reference signal of the M*ₜ* ports may support channel estimation for a maximum of K*ₜ* ports. In other words, the reference signal of the M*ₜ* ports may be used to obtain a channel of a maximum of K*ₜ* ports, or a quantity of ports for a channel that may be obtained using the reference signal of the M*ₜ* ports may be less than or equal to K*ₜ*, or a maximum quantity of ports supported for channel estimation by a first base reference signal is K*ₜ*.

In conclusion, it can be learned that each base reference signal resource involves two quantities of ports: a maximum quantity of ports for transmitting reference signals (for ease of description, denoted as a maximum quantity of ports for reference signals, for example, M*ₜ*) and a maximum quantity of ports for an estimated channel (for ease of description, denoted as a maximum quantity of ports supported for channel estimation, or briefly referred to as a maximum quantity of supported ports, for example, K*ₜ*). In this application, for each base reference signal resource, a quantity of ports for transmitting reference signals may be less than or equal to the maximum quantity of supported ports, and a quantity of ports for an estimated channel may be less than or equal to the maximum quantity of ports for reference signals.

It should be noted that the "maximum quantity of ports for transmitting reference signals" by the base reference signal resource may be understood as: It can be learned, from the foregoing description with reference to the channel estimation assistance information, that a matrix (namely, the foregoing matrix **P**_{aug}) indicating a port pattern of a reference signal may be determined based on a maximal linearly independent set of a spatial domain projection matrix of a channel, and a quantity of non-zero elements in the matrix is denoted as the maximum quantity of ports for transmitting reference signals by the base reference signal resource, each non-zero element in the matrix is located in one column, and each column corresponds to one port. In other words, the maximum quantity of ports for transmitting reference signals by the base reference signal resource may be a quantity of columns of the matrix. The *t*^{th} base reference signal resource is used as an example. A maximum quantity of ports for transmitting reference signals by the *t*^{th} base reference signal resource is M*ₜ*, that is, a matrix indicating a port pattern of a reference signal includes M*ₜ* columns. It should be understood that, this does not mean that the network device can only send reference signals through M*ₜ* ports. The network device may alternatively send reference signals through more than M*ₜ* ports, which achieves a small gain, and may introduce air interface overhead, making it unnecessary.

Correspondingly, the "maximum quantity of ports supported" for channel estimation by the base reference signal may be a quantity of rows of the matrix indicating the port pattern of the reference signal. If a resource is defined as a resource in three dimensions: time domain, frequency domain, and spatial domain, the "maximum quantity of ports supported" for channel estimation by the base reference signal resource may be referred to as a quantity of ports included in the base reference signal resource. The *t*^{th} base reference signal resource is used as an example. A maximum quantity of ports supported for channel estimation by the *t*^{th} base reference signal resource is K*ₜ*. In other words, the *t*^{th} base reference signal resource includes K*ₜ* ports.

When T is greater than 1, any two of the T base reference signal resources may satisfy: Maximum quantities of ports for transmitting reference signals are different, and/or maximum quantities of ports supported for channel estimation are different.

For example, for a base reference signal resource #1, a maximum quantity of ports for reference signals is 100, and a maximum quantity of supported ports is 1024; for a base reference signal resource #2, a maximum quantity of ports for reference signals is 200, and a maximum quantity of supported ports is 1024; for a base reference signal resource #3, a maximum quantity of ports for reference signals is 50, and a maximum quantity of supported ports is 256; and for a base reference signal resource #4, a maximum quantity of ports for reference signals is 50, and a maximum quantity of supported ports is 128. Further examples are not listed.

It can be learned that, for the base reference signal resource #1 and the base reference signal resource #2, maximum quantities of supported ports are the same, but maximum quantities of ports for reference signals are different. The base reference signal resource #1 is more efficient in reducing air interface overhead, and the base reference signal resource #2 provides more accurate channel estimation due to a larger quantity of observed ports for reference signals. A similar relationship exists between the base reference signal resource #3 and the base reference signal resource #4. Details are not described again. The network device may select, based on service requirements, an appropriate base reference signal resource for use.

Optionally, the first information indicates one or more of the following of each of the T base reference signal resources: a resource pattern, a port pattern, and base channel estimation assistance information.

The following still uses the *t*^{th} base reference signal resource as an example for description.

### Resource pattern

Because the *t*^{th} base reference signal resource may be used to transmit a reference signal of a maximum of M*ₜ* ports, a resource pattern of the *t*^{th} base reference signal resource may indicate a mapping relationship between a reference signal of each of the M*ₜ* ports and a time-frequency resource. That is, time-frequency resources (more specifically, REs) to which the reference signal of each port is mapped may be determined based on the resource pattern, so that the terminal receives the reference signal at corresponding positions.

### Port pattern

Because the *t*^{th} base reference signal resource may be used to transmit a reference signal of a maximum of M*ₜ* ports and estimate a channel of a maximum of K*ₜ* ports, and the M*ₜ* ports are included in the K*ₜ* ports, a port pattern may indicate indexes of the M*ₜ* ports in the K*ₜ* ports. It may be understood that the port pattern implicitly indicates a maximum quantity of ports for transmitting reference signals and a maximum quantity of ports supported for channel estimation by the *t*^{th} base reference signal resource.

When the first information indicates the resource pattern and the port pattern, in a possible implementation, the resource pattern and the port pattern are indicated by indicating a matrix **P***ₜ* . The matrix **P*ₜ*** satisfies: **P***ₜ* = **P**_{port,*t*} ⊗**P**_{RE,*t*}, where **P**_{port,*t*} represents a port pattern of the *t*^{th} base reference signal resource, and **P**_{RE,*t*} represents a resource pattern of the *t*^{th} base reference signal resource.

The following describes the matrix **P**_{port,*t*} and the matrix **P**_{RE,*t*} in detail.

For example, a quantity of REs included in the *t*^{th} base reference signal resource is N_{RE,*t*}, and a maximum quantity of supported ports is K*ₜ*. For each receive port, a channel that can be observed is represented as a matrix **H***ₜ* of dimensions N_{RE,*t*} × K*ₜ*. The matrix **P**_{port,*t*} and the matrix **P**_{RE,*t*} may be obtained by performing spatial domain processing and time-frequency domain processing on a channel, respectively.

### (1) Spatial domain processing

The network device may perform spatial domain orthogonal-triangular (quadrature rectangle, QR) decomposition on the channel matrix **H***ₜ*, to obtain the matrix **P**_{port,*t*} . The matrix **P**_{port,*t*} has dimensions of K*ₜ* × M*ₜ*, and includes M*ₜ* non-zero elements, and all other elements are zero. The M*ₜ* non-zero elements are located in M*ₜ* columns of the matrix **P**_{port,*t*} , that is, each non-zero element is located in one column of the matrix **P**_{port,*t*} . The M*ₜ* non-zero elements correspond to M*ₜ* ports, and a position of each non-zero element in a column in which the non-zero element is located may indicate an index of a corresponding port in K*ₜ* ports. This indicates that M*ₜ* important ports are selected from the K*ₜ* ports. For example, if a non-zero element (for example, "1") is in a first row of a column in which the non-zero element is located, it indicates that a port corresponding to the non-zero element is a first port of the K*ₜ* ports, that is, an index of the port can be determined. It should be understood that the matrix **P**_{port,*t*} is equivalent to the matrix **P**_{aug} in the foregoing term description of the channel estimation assistance information.

The channel matrix **H***ₜ* may be right multiplied by the matrix **P**_{port,*t*} , to obtain a matrix **H*ₜ*'** , where **H***ₜ* ' = **H***ₜ* ·**P**_{port,*t*}. The matrix **H*ₜ*'** has dimensions of N_{RE,*t*} × M*ₜ*, that is, a quantity of ports is reduced from K*ₜ* to M*ₜ*, which is analogous to achieving port dimensionality reduction in spatial domain through precoding.

### (2) Time-frequency domain processing

Time domain QR decomposition may be further performed on a transpose of the matrix **H*ₜ*'**, to obtain the matrix **P**_{RE,*t*} . The matrix **P**_{RE,*t*} has dimensions of M*ₜ* × N'_{RE,*t*}, where N'_{RE,*t*} is less than N_{RE,*t*}. The matrix **P**_{RE,*t*} includes N'_{RE,*t*} non-zero elements, and all other elements are zero. The N'_{RE,*t*} non-zero elements are located in N'_{RE,*t*} columns of the matrix **P**_{RE,*t*} , that is, each non-zero element is located in one column of the matrix **P**_{RE,*t*} . The N'_{RE,*t*} non-zero elements correspond to N'_{RE,*t*} REs, and a position of each non-zero element in a column in which the non-zero element is located may indicate an index of a corresponding RE in N_{RE,*t*} REs. This indicates that N'_{RE,*t*} important REs are selected from the N_{RE,*t*} REs. In this way, resource overhead of reference signals in time-frequency domain can be reduced.

It should be understood that the foregoing describes a process of obtaining the matrix **P**_{port,*t*} and the matrix **P**_{RE,*t*} (or the port pattern and the resource pattern) by using an example in which spatial domain processing is performed before time-frequency domain processing. However, this should not constitute any limitation on this application. In an actual processing process, the network device may perform time-frequency domain QR decomposition on the channel matrix **H***ₜ*, followed by spatial domain QR decomposition, to obtain the **P**_{port,*t*} and the **P**_{RE,*t*} , and then obtain the **P***ₜ* . Alternatively, the network device may obtain the port pattern and the resource pattern in another manner. This is not limited in this application. The network device may obtain, based on the foregoing process, a matrix { **P***ₜ* } corresponding to each base reference signal resource, and indicate the matrix { **P***ₜ* } to the terminal via the first information.

It should be further understood that the port pattern and the resource pattern may alternatively be indicated by indicating the matrix **P**_{port,*t*} and the matrix **P**_{RE,*t*} , and are not necessarily indicated by indicating the matrix **P***ₜ* .

In another implementation, the network device may not indicate the resource pattern and the port pattern of each base reference signal resource via the first information, but the terminal determines the resource pattern and the port pattern of each base reference signal resource. The terminal may obtain, based on the foregoing process, a matrix { **P***ₜ* } corresponding to each base reference signal resource, obtain matrices { **P**_{port,*t*} } and { **P**_{RE,*t*} } corresponding to each base reference signal resource, or obtain a resource pattern and a port pattern corresponding to each base reference signal resource. Alternatively, the terminal may obtain a historical port pattern and resource pattern of a reference signal resource that occupies a same position as each base reference signal resource. This is not limited in this application.

Alternatively, the network device may indicate the **P**_{port,*t*} or the **P**_{RE,*t*} to the terminal via the first information, and the terminal determines, based on the received first information, the other matrix.

### Base channel estimation assistance information

The channel estimation assistance information has been described in the foregoing term description. In this embodiment, the base channel estimation assistance information is named merely to be distinguished from the following first channel estimation assistance information and second channel estimation assistance information. The base channel estimation assistance information corresponds to the base reference signal resource. Base channel estimation assistance information corresponding to the *t*^{th} base reference signal resource is used to estimate, based on a channel measurement result of the M*ₜ* ports, the channel of the K*ₜ* ports. Estimating the channel of the K*ₜ* ports based on the channel measurement result of the M*ₜ* ports may specifically mean that a channel measurement result obtained by measuring the reference signal of the M*ₜ* ports is a channel matrix of the M*ₜ* ports, and then the channel of the K*ₜ* ports is reconstructed based on the channel matrix of the M*ₜ* ports and the base channel estimation assistance information. The channel matrix of the M*ₜ* ports may alternatively be replaced with another form, for example, a channel vector of the M*ₜ* ports.

The network device may indicate, to the terminal via the first information, base channel estimation assistance information corresponding to each base reference signal resource. The base channel estimation assistance information corresponding to each base reference signal resource may alternatively be determined by the terminal rather than being indicated via the first information. Alternatively, the terminal may compute, based on the method provided in the foregoing term description, the base channel estimation assistance information corresponding to each base reference signal resource. Alternatively, the terminal may obtain historical channel estimation assistance information of a reference signal resource that occupies a same position as each base reference signal resource.

**Maximum quantity of ports supported for channel estimation**: a maximum quantity of ports for a channel that can be estimated via reference signals transmitted using the base reference signal resource. For example, a maximum quantity of ports supported for channel estimation by the *t*^{th} base reference signal resource is K*ₜ*. In other words, the *t*^{th} base reference signal resource may be used to estimate a channel of less than or equal to K*ₜ* ports.

Dimensions of the base channel estimation assistance information are related to the maximum quantity of ports supported for channel estimation, and a quantity of columns of the base channel estimation assistance information may be the maximum quantity of ports supported for channel estimation. Therefore, the base channel estimation assistance information may indicate the maximum quantity of ports supported for channel estimation. In other words, the base channel estimation assistance information is a possible form of indicating the maximum quantity of ports supported for channel estimation.

It should be understood that the T base reference signal resources may be predefined, for example, resource patterns, port patterns, base channel estimation assistance information, and the like of the T base reference signal resources are pre-stored in a device before delivery, so there is no need for the network device to indicate the T base reference signal resources to the terminal via the first information. In other words, step 401 is an optional step.

In step 402, the network device sends, on a first base reference signal resource, a first reference signal. Correspondingly, the terminal receives, on the first base reference signal resource, the first reference signal.

For example, in the RAN in which the CU, the DU, and the RU are deployed, a specific implementation of step 402 may be: The CU-CP generates a first reference signal, and sends the first reference signal to the terminal by using the DU and the RU. In the ORAN, a specific implementation of step 402 may be: The O-CU-CP generates a first reference signal, and sends the first reference signal to the terminal by using the O-DU and the O-RU.

It should be understood that the first base reference signal resource may be any one of the T base reference signal resources. A base reference signal resource selected by the network device to transmit a reference signal is not limited in this application.

Because a first resource is from the first base reference signal resource, and a maximum quantity of ports for reference signals of the first base reference signal resource is M, the first resource may be used to transmit a reference signal of no more than M ports. In this embodiment, it is assumed that the first resource may be used to transmit a reference signal of m₁ ports. In other words, the first reference signal transmitted on the first resource is a reference signal of m₁ ports, where m₁ is a positive integer less than M. It may be understood that the m₁ ports are from the M ports. In other words, the m₁ ports are included in the M ports, or the m₁ ports are some of the M ports.

In conclusion, the following relationships may be obtained: k₁ ≤ K, m₁ < M, m₁ ≤ k₁, and M ≤ K.

It should be understood that, in this application, for ease of distinction and description, the base reference signal resource is defined as a time-frequency resource, to be distinguished from a spatial domain resource (for example, a port). In another implementation, the base reference signal resource may alternatively be defined as a resource in three dimensions: time domain, frequency domain, and spatial domain. In this case, a resource for transmitting the first reference signal may be a part of the first base reference signal resource. Step 402 may also be described as: receiving, on a first resource, a first reference signal, where the first resource is from a first base reference signal resource. Correspondingly, the terminal receives, on the first resource, the first reference signal.

In this specification, for ease of understanding and description, unless otherwise specified, a time-frequency resource is briefly referred to as a resource.

It may be understood that because the first base reference signal resource is one of the T base reference signal resources, a maximum quantity M of ports for reference signals corresponding to the first base reference signal resource may be one of M₁ to M_{T}, and a maximum quantity K of supported ports may be one of K₁ to K_{T}. In the following, this embodiment is described mainly by using a reference signal received on the first base reference signal resource as an example. Therefore, for ease of description, subscripts used to distinguish base reference signal resources in parameters are omitted. In other words, the channel matrix is **H**, and has dimensions of N_{RE} × K, the maximum quantity of ports for reference signals corresponding to the first base reference signal resource is M, the maximum quantity of supported ports is K, and a quantity of REs included in the first base reference signal resource is N_{RE}.

A person skilled in the art may understand that, by measuring the received first reference signal that is transmitted using the first base reference signal resource, the terminal can obtain the following channel measurement result: **H·P**_{#1}. **P**_{#1} is a matrix of dimensions K × m₁, and may be used to reduce dimensionality of a channel from K ports to m₁ ports, or to select m₁ ports from K ports. The **P**_{#1} satisfies: ${P}_{# 1} = {P}_{port} ⋅ {P}_{sub}^{+}$, where ${P}_{port} ⋅ {P}_{sub}^{+}$ represents performing weighted dimensionality reduction on a matrix **P**ₚₒᵣₜ by using ${P}_{sub}^{+} ⋅ {P}_{port}$ is a matrix of dimensions K × M, represents a port pattern, and indicates indexes of M ports in K ports. ${P}_{sub}^{+}$ is a weighted dimensionality reduction matrix obtained according to an extraction rule, has dimensions of M × m₁, and is used to reduce dimensionality of the first reference signal from M ports to m₁ ports, or to select m₁ ports from M ports. That is, a quantity of ports may be reduced from M to m₁ by right multiplying **P**ₚₒᵣₜ by ${P}_{sub}^{+}$.

An extraction rule for performing extraction on channel estimation assistance information **P**⁺ may be, for example, obtaining a maximal linearly independent set of row vectors of the **P**⁺, or may be extracting several rows that reach a preset threshold in descending order of 2-norms of the row vectors of the **P**⁺. This is not limited in this application.

Optionally, the method further includes: The network device sends second information, where the second information indicates an identifier of the first base reference signal resource of the T base reference signal resources. Correspondingly, the terminal receives the second information.

When T is greater than 1, base reference signal resources may be distinguished by different identifiers. The network device may indicate, via the second information, an identifier of an actually used base reference signal resource (for example, the first base reference signal resource). The terminal may determine, based on the second information, the first base reference signal resource, and then receive, on the first base reference signal resource, the first reference signal.

It may be understood that, when T is equal to 1, even if the network device does not indicate the identifier of the base reference signal resource, the terminal may determine, based on configuration information, the first base reference signal resource. Therefore, the network device does not necessarily send the second information.

In addition, the network device may indicate to the terminal through signaling when the base reference signal resource is switched, or may not indicate to the terminal additionally through signaling when the base reference signal resource does not need to be switched. For example, if a resource used when the network device sends a reference signal last time is from the first base reference signal resource, and a resource needed when the network device sends a reference signal next time is also from the first base reference signal resource, the network device may not need to send the second information. For another example, if a resource used when the network device sends a reference signal last time is from the first base reference signal resource, and a resource needed when the network device sends a reference signal next time is from a second base reference signal resource, the network device may indicate an identifier of the second base reference signal resource via the second information. In this way, unnecessary signaling overhead can be reduced.

In step 403, the terminal determines, based on base channel estimation assistance information corresponding to the first base reference signal resource, first channel estimation assistance information.

As described above, the base channel estimation assistance information corresponding to the first base reference signal resource is used to estimate, based on a channel measurement result of the M ports, a channel of K ports, and in this embodiment, the m₁ ports for the first reference signal are from the M ports. It is not difficult to learn that there is a nesting relationship between the m₁ ports and the M ports, and between the k₁ ports and the K ports. The nesting relationship may be applied between the first channel estimation assistance information and the base channel estimation assistance information. Therefore, based on the nesting relationship, the terminal may determine, based on the base channel estimation assistance information corresponding to the first base reference signal resource, channel estimation assistance information used to obtain a channel corresponding to a port for which channel estimation needs to be performed.

The terminal may determine, based on an index of a port corresponding to a channel that needs to be estimated in the K ports and indexes of the m₁ ports in the M ports, the first channel estimation assistance information from the base channel estimation assistance information.

For example, it is assumed that a channel of k₁ ports needs to be estimated. The terminal may perform, based on indexes of the k₁ ports in the K ports, column extraction on the base channel estimation assistance information **P**⁺, to extract columns corresponding to the k₁ ports from K columns, to form a matrix **P**⁺(:,{k₁}). **P**⁺(:,{k₁}) represents a matrix of dimensions M × k₁, which is obtained by extracting k₁ columns from the K columns of the matrix **P**⁺ and combining the k₁ columns in an order of the k₁ columns in the matrix **P**⁺.

The terminal may obtain, based on the indexes of the m₁ ports in the M ports, a matrix **P**_{sub} of dimensions m₁ × M. The matrix **P**_{sub} includes m₁ non-zero elements (for example, "1"), and positions (namely, column indexes) of the m₁ non-zero elements in M columns may be determined based on the indexes of the m₁ ports in the M ports. For example, if the indexes of the m₁ ports in the M ports are 1 and 3, the matrix **P**_{sub} includes two non-zero elements, which are respectively located in a first row and a first column and a second row and a third column.

The terminal may obtain, based on the **P**_{sub} , a matrix ${P}_{# 1}^{+}$, where ${P}_{# 1}^{+} = {P}_{sub} ⋅ {P}^{+} \left(:,\left\{{k}_{1}\right\}\right)$. The formula represents performing row extraction on the ${P}^{+} \left(:,\left\{{k}_{1}\right\}\right)$ by using the **P**_{sub}, and the matrix ${P}_{# 1}^{+}$ obtained through extraction has dimensions of m₁ × k₁. The matrix ${P}_{# 1}^{+}$ is a matrix obtained by extracting m₁ row vectors from M row vectors of the matrix **P**⁺(:,{k₁}) and combining the m₁ row vectors in an order of the m₁ row vectors in the matrix **P**⁺(:,{k₁}) . It may be understood that the column indexes of the m₁ non-zero elements in the matrix **P**_{sub} are row indexes of the m₁ row vectors from the matrix ${P}_{# 1}^{+}$ in the matrix **P**⁺(:,{k₁}).

Therefore, the first channel estimation assistance information ${P}_{# 1}^{+}$ may be obtained, and the ${P}_{# 1}^{+}$ satisfies: ${P}_{# 1}^{+} = {P}_{sub} ⋅ {P}^{+} \left(:,\left\{{k}_{1}\right\}\right)$.

Optionally, a port for a channel that needs to be estimated by the terminal may be indicated by the network device, or may be determined by the terminal.

In a possible implementation, the network device may determine a port for a channel that needs to be estimated, and indicate the port to the terminal via third information.

Optionally, the method further includes: The network device sends third information to the terminal, where the third information indicates the indexes of the k₁ ports in the K ports. Correspondingly, the terminal receives the third information from the network device.

In a possible design, the indexes of the k₁ ports in the K ports may be indicated via a bitmap (bitmap) of K bits. For example, in ascending order of port numbers of the K ports, the K ports are in one-to-one correspondence with the K bits in the bitmap, and a value of each bit indicates whether a port corresponding to the bit is selected. In an example, it is assumed that a value of a bit corresponding to a selected port is set to "1", a value of a bit corresponding to an unselected port is set to "0", K is 12, and k₁ is 4. The bitmap may be represented as "001111000000". The bitmap may be considered as an explicit indication of the indexes of the k₁ ports in the K ports.

In another possible design, the indexes of the k₁ ports in the K ports may alternatively be indicated via a value k₁. For example, the network device and the terminal may pre-agree on a rule for selecting, from the K ports, a port for a channel to be estimated. For example, the rule may be that several ports are selected in ascending order of port numbers. In this case, the network device only needs to indicate, to the terminal, a quantity k₁ of ports that need to be estimated, and the terminal may determine the indexes of the k₁ ports in the K ports. Therefore, the value k₁ may also be considered as an implicit indication of the indexes of the k₁ ports in the K ports.

It should be understood indicating the indexes of the k₁ ports in the K ports via the third information is not limited to the two manners listed above. A specific manner of indicating the indexes of the k₁ ports in the K ports via the third information is not limited in this application.

Optionally, the indexes of the m₁ ports in the M ports may be indicated by the network device, or may be determined by the terminal.

In a possible implementation, the network device sends fourth information to the terminal, where the fourth information indicates the indexes of the m₁ ports in the M ports. Correspondingly, the terminal receives the fourth information from the network device.

In other words, the network device may determine, from the M ports, m₁ important ports to send reference signals, and indicate the m₁ ports to the terminal. The network device may determine, based on a predefined extraction rule, the m₁ important ports from the M ports, and indicate the indexes of the m₁ ports in the M ports to the terminal. A possible manner in which the network device indicates the indexes of the m₁ ports in the M ports to the terminal is indicating the matrix **P**_{sub} to the terminal. For descriptions of the matrix **P**_{sub} , refer to the foregoing descriptions about determining the first channel estimation assistance information. Details are not described again.

It should be understood that a specific process in which the network device determines the m₁ ports from the M ports is described in detail in step 402. For details, refer to the foregoing related descriptions. Details are not described again.

In another possible implementation, the network device sends fourth information to the terminal, where the fourth information indicates an extraction rule for extracting the m₁ ports from the M ports. Correspondingly, the terminal receives the fourth information from the network device.

In other words, the network device may alternatively delegate an extraction task to the terminal. The network device may indicate the terminal to perform extraction based on a specific extraction rule. The extraction rule may be, for example, extracting rows that reach a preset threshold in descending order of 2-norms of row vectors of a matrix, or may be performing extraction based on a maximal linearly independent set of the row vectors of the matrix, or may be another rule. This is not limited in this application.

For example, the terminal may obtain, based on an extraction rule indicated by the network device, the matrix **P**_{sub}. For example, the extraction rule is performing extraction based on a maximal linearly independent set of row vectors of the matrix **P**⁺(:,{k₁}). The terminal may compute, based on the row vector of the **P**⁺(:,{k₁}), the maximal linearly independent set, to obtain the matrix **P**_{sub}.

The matrix **P**_{sub} includes the m₁ non-zero elements, and the column indexes of the m₁ non-zero elements are the indexes of the m₁ ports in the M ports.

It should be understood that the foregoing extraction rule is merely an example. For example, the extraction rule may alternatively be extracting several rows that reach a preset threshold in descending order of 2-norms of row vectors of the matrix **P**⁺(:,{k₁}). This application includes but is not limited thereto.

It should be further understood that an extraction rule for extracting m₁ row vectors from M row vectors by the terminal should be the same as the extraction rule for extracting the m₁ ports from the M ports by the network device. For example, both extraction rules may be obtaining the maximal linearly independent set, or may be performing extraction in descending order of 2-norms of vectors.

Further, the network device may determine, based on a capability of the terminal, whether to directly indicate the indexes of the m₁ ports in the M ports to the terminal or indicate an extraction rule to the terminal. For example, when a computing capability of the terminal is high, the network device may select, for the terminal, one extraction rule from extraction rules supported by the terminal. When a computing capability of the terminal is low, the network device may directly indicate, via the fourth information, the indexes of the m₁ ports in the M ports, instead of delegating an extraction task to the terminal. Reporting of capability information of the terminal is described in detail in the following, and is not described in detail herein.

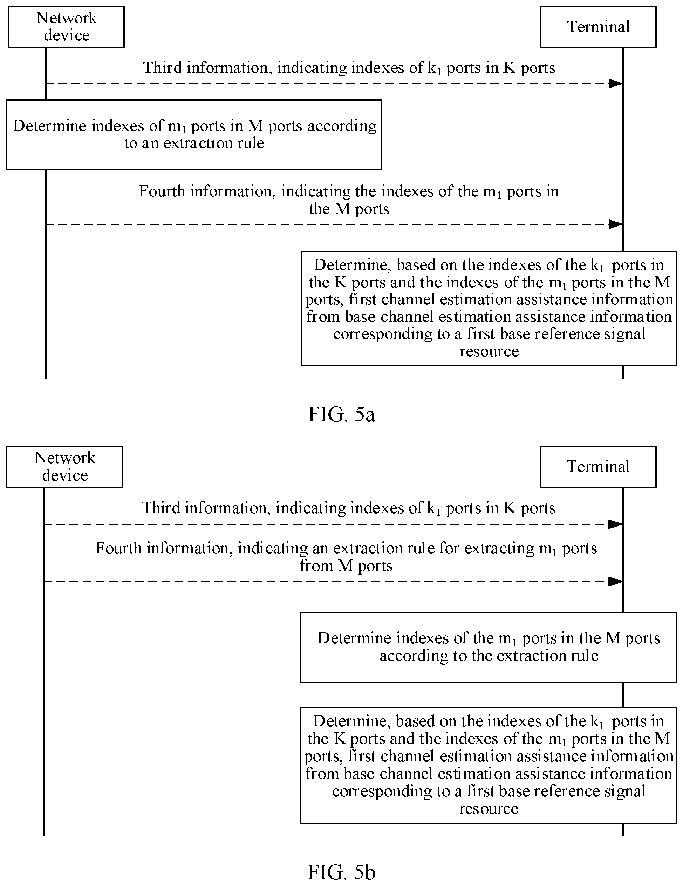

For ease of understanding, FIG. 5a and FIG. 5b provide examples of two possible implementations of step 403.

Refer to FIG. 5a. The network device may send the third information to the terminal, to indicate the indexes of the k₁ ports in the K ports. The network device may extract the m₁ ports from the M ports according to the extraction rule, and send the fourth information to the terminal, to indicate the indexes of the m₁ ports in the M ports. The terminal may determine, based on the third information and the fourth information, the indexes of the k₁ ports in the K ports and the indexes of the m₁ ports in the M ports, so as to determine, based on the indexes of the k₁ ports in the K ports and the indexes of the m₁ ports in the M ports, the first channel estimation assistance information from the base channel estimation assistance information corresponding to the first base reference signal resource.

A difference between procedures shown in FIG. 5b and FIG. 5a lies in that the network device indicates the extraction rule to the terminal via the fourth information, and the terminal extracts the m₁ ports from the M ports. Therefore, the fourth information indicates the extraction rule rather than the indexes of the m₁ ports in the M ports. Other steps in FIG. 5b are the same as those in FIG. 5a. For details, refer to the foregoing related descriptions. Details are not described again.

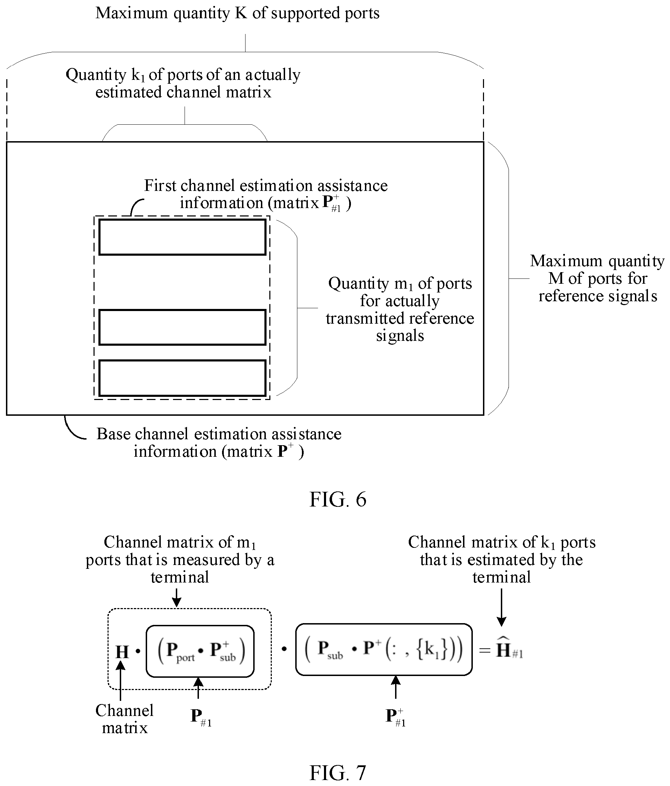

To better understand a relationship between the base channel estimation assistance information and the first channel estimation assistance information, FIG. 6 shows an example of the base channel estimation assistance information and the first channel estimation assistance information. As shown in the figure, the base channel estimation assistance information may be represented as a matrix of dimensions M (the maximum quantity of ports for reference signals) × K (the maximum quantity of supported ports), and may be used to estimate, based on the channel measurement result of the M ports, the channel of the K ports. It may be understood that the M ports are included in the K ports, that is, the channel of the K ports is estimated based on a channel of some ports of the K ports. The first channel estimation assistance information is k₁ columns and m₁ rows extracted from the base channel estimation assistance information, that is, the first channel estimation assistance information is obtained by performing column extraction and row extraction in sequence. It is not difficult to learn that, because the k₁ columns are extracted from the K columns, the k₁ ports are included in the K ports; because the m₁ rows are extracted from the M rows, the m₁ ports are included in the M ports; and because the M ports are included in the K ports, the m₁ ports are also included in the K ports. In addition, because the reference signal of the m₁ ports is used to estimate a reference signal of the k₁ ports, the m₁ ports are further included in the k₁ ports.

In step 404, the terminal determines, based on the first reference signal and the first channel estimation assistance information, first CSI, where the first CSI corresponds to a channel of the k₁ ports.

k₁ is a positive integer less than or equal to K and greater than or equal to m₁.

In this embodiment, the first CSI may be a PMI corresponding to the channel of the k₁ ports, or may be a channel estimation result that may indicate the channel corresponding to the k₁ ports. The following provides detailed descriptions with reference to several cases.

Optionally, the first CSI is a channel estimation result, and the channel estimation result indicates the channel of the k₁ ports.

That is, the terminal obtains, based on the received reference signal of the m₁ ports, a channel corresponding to a larger quantity of ports (namely, the k₁ ports). The terminal may indicate a quantized channel of the k₁ ports through a channel estimation result.

In a possible implementation, the terminal may measure, based on the reference signal of the m₁ ports, a channel corresponding to the m₁ ports, and then obtain, based on the first channel estimation assistance information, the channel corresponding to the k₁ ports.

First, the terminal may measure, based on the reference signal of the m₁ ports, the channel corresponding to the m₁ ports. The channel may be represented by a channel matrix **H'**, where the **H**' satisfies: **H**'=**H**·**P**_{#1}. The channel matrix **H**' is a channel matrix corresponding to the m₁ ports.

Then, a process in which the terminal obtains, based on the first channel estimation assistance information, a channel matrix **Ĥ**_{#1} corresponding to the k₁ ports may be expressed by using the following formula: ${\hat{H}}_{# 1} = H ′ ⋅ {P}_{sub}^{+}$. **H'** is the channel matrix corresponding to the m₁ ports, and ${P}_{sub}^{+}$ is the first channel estimation assistance information. Substituting expansions of **H**' and ${P}_{sub}^{+}$ into the foregoing formula yields: ${\hat{H}}_{# 1} = H ′ ⋅ {P}_{sub}^{+} = H ′ ⋅ \left({P}_{sub}⋅{P}^{+}\left(:,\left\{{k}_{1}\right\}\right)\right) = H ⋅ {P}_{# 1} ⋅ \left({P}_{sub}⋅{P}^{+}\left(:,\left\{{k}_{1}\right\}\right)\right) = H ⋅ \left({P}_{port}⋅{P}_{sub}^{+}\right) ⋅ \left({P}_{sub}⋅{P}^{+}\left(:,\left\{{k}_{1}\right\}\right)\right)$.

For ease of understanding, FIG. 7 shows the channel of the m₁ ports measured by the terminal and the channel of the k₁ ports estimated by the terminal. As shown in FIG. 7, the channel matrix of the m₁ ports measured by the terminal based on the reference signal of the m₁ ports is $H ⋅ \left({P}_{port}⋅{P}_{sub}^{+}\right)$, and the channel matrix **Ĥ**_{#1} of the k₁ ports may be estimated based on the first channel estimation assistance information **P**_{sub} ·**P**⁺(:,{k₁}) .

In another possible implementation, the terminal may measure, based on the reference signal of the m₁ ports, the channel matrix corresponding to the m₁ ports, and then obtain, by using a least square (least square) method or an interpolation method, the channel matrix corresponding to the k₁ ports. Both the least square method and the interpolation method are existing technologies. Therefore, details are not described herein.

It can be learned that the terminal may estimate, based on a reference signal of a small quantity of ports (for example, m₁ ports), a channel of a large quantity of ports (for example, k₁ ports), and may estimate a channel of any quantity of ports, where the quantity is less than or equal to a maximum quantity K of supported ports of the first base reference signal resource. In other words, a quantity of ports for a channel that may be estimated may be any integer less than or equal to K.

Optionally, the first CSI is the PMI corresponding to the channel of the k₁ ports.

The terminal may estimate the channel of the k₁ ports using the method provided above, and then perform SVD on the channel matrix of the k₁ ports to obtain a precoding matrix adapted to the channel matrix of the k₁ ports. Then, the terminal quantizes the precoding matrix by using the PMI, for example, quantizes the precoding matrix using a type I (type I) or type II (type II) codebook feedback scheme defined in the 3GPP technical specification (technical specification, TS) 38.214. Both a manner in which the terminal obtains, based on the channel, the precoding matrix and a manner in which the terminal quantizes the precoding matrix are existing technologies. Therefore, details are not described herein.

It should be noted that the first channel estimation assistance information is used to determine the first CSI. Therefore, in some implementations, both step 403 and step 404 may be considered as a process of determining the first CSI. In this specification, determining of the first channel estimation assistance information and determining of the first CSI are separately described for ease of understanding and description.

In step 405, the terminal sends the first CSI. Correspondingly, the network device receives the first CSI.

For example, in the RAN in which the CU, the DU, and the RU are deployed, a specific implementation of step 405 may be: The RU receives the first CSI, and forwards the received first CSI to the DU for processing. In the ORAN, a specific implementation of step 405 may be: The O-RU receives the first CSI, performs partial physical layer processing on the first CSI, and forwards the processed first CSI to the O-DU for processing.

The terminal may send, by using an uplink resource, the first CSI to the network device. For example, the first CSI is carried in uplink control information (uplink control information, UCI).

The network device may determine, based on the received first CSI, a precoding matrix corresponding to the channel of the k₁ ports.

As shown in step 403, the first CSI determined by the terminal based on the first reference signal may be a PMI corresponding to the channel of the k₁ ports, may be a channel estimation result that may indicate the channel corresponding to the k₁ ports, or may be a channel measurement result that may indicate the channel corresponding to the m₁ ports. Depending on different content of the first CSI, operations of determining the precoding matrix by the network device are different.

If the first CSI is the PMI corresponding to the channel of the k₁ ports, the network device may directly determine, based on the PMI, the precoding matrix.

If the first CSI is the channel estimation result indicating the channel of the k₁ ports, the network device may determine, based on the channel estimation result, the channel of the k₁ ports, and may further determine, based on the channel, a precoding matrix corresponding to the channel of the k₁ ports.

If the first CSI is the channel measurement result indicating the channel of the m₁ ports, the network device may determine, based on the channel measurement result, the channel of the m₁ ports, and then determine the channel of the k₁ ports with reference to channel estimation assistance information. The network device may further determine, based on the channel of the k₁ ports, a precoding matrix corresponding to the channel of the k₁ ports.

It should be understood that, for a specific manner of determining, based on the channel of the k₁ ports, the corresponding precoding matrix, refer to existing technologies. For example, a conjugate transpose of a right unitary matrix obtained by performing SVD on the channel of the k₁ ports may be determined as the precoding matrix. A specific process is not described in detail herein.

It should be understood that the process in which the network device determines, based on the base channel estimation assistance information corresponding to the first base reference signal resource, the first channel estimation assistance information, estimates, based on the channel of the m₁ ports and the first channel estimation assistance information, the channel of the k₁ ports, and determines, based on the channel of the k₁ ports, the precoding matrix adapted to the channel of the k₁ ports is similar to an implementation process in which the terminal determines the first channel estimation assistance information in step 403 and the terminal determines the first CSI in step 404. For details, refer to the foregoing related descriptions. Details are not described again.

It may be understood that, if the terminal uses the channel measurement result indicating the channel of the m₁ ports as the first CSI, the terminal may directly determine, based on the received first reference signal, the first CSI, without determining the first channel estimation assistance information. Therefore, the network device may not need to indicate, to the terminal, the base channel estimation assistance information corresponding to the first base reference signal resource.

Based on step 402 to step 405, the network device may obtain the channel of the k₁ ports. In this way, one round of channel estimation is completed.

In this embodiment of this application, the first base reference signal resource is preconfigured for the terminal, and the first base reference signal resource may be used to estimate, based on a reference signal of a maximum of M ports, a channel of a maximum of K (K ≥ M) ports. The network device may select, based on requirements, some ports from the M ports to transmit a reference signal, to estimate a channel of some or all of the K ports. In this way, the network device may flexibly select, based on the base reference signal resource and service requirements, a reference signal of any quantity of ports of the M ports to perform channel estimation, to estimate a channel of any quantity of ports of the K ports, thereby supporting flexible changes in a quantity of ports when RF channels are dynamically disabled. Because the quantity m₁ of ports for the first reference signal may be less than M, and M is less than or equal to K, a channel of a large quantity of ports may be estimated based on a reference signal of a small quantity of ports. As a quantity of ports for reference signals sent over an air interface decreases, and port multiplexing is considered, air interface overhead introduced by the reference signals is reduced.

In addition, a plurality of base reference signal resources including the first base reference signal resource may be preconfigured for the terminal. Maximum quantities of ports for transmitting reference signals by different base reference signal resources are different, and/or maximum quantities of ports supported for channel estimation by different base reference signal resources are different. The network device may select, based on requirements, an appropriate base reference signal resource to transmit a reference signal. For example, when a quantity of ports that need to be estimated is small, a base reference signal resource having a small maximum quantity of supported ports may be selected. When a quantity of ports that need to be estimated is small but high estimation accuracy is required, a base reference signal resource having a small maximum quantity of supported ports and a large quantity of ports for transmitting reference signals may be selected. Further examples are not listed. It can be learned that the network device may flexibly select, based on requirements, a base reference signal resource to transmit a reference signal, thereby satisfying different service requirements and ensuring system performance.

In this embodiment, in two adjacent rounds of channel estimation, a same base reference signal resource may be used to transmit reference signals, and the previous round of channel estimation may be used as a reference for the next round of channel estimation. When sending reference signals in the next round, the network device may select and reuse a reference signal of some or all ports from reference signals sent in the previous round. Therefore, the terminal may also reuse the first channel estimation assistance information determined in the previous round of channel estimation, to perform the next round of channel estimation.

Optionally, the method further includes step 406 to step 409, which are specifically as follows:
In step 406, the network device sends, on the first base reference signal resource, a second reference signal. Correspondingly, the terminal receives, on the first base reference signal resource, the second reference signal.

Similar to step 402, in the RAN in which the CU, the DU, and the RU are deployed, a specific implementation of step 402 may be: The CU-CP generates a second reference signal, and sends the second reference signal to the terminal by using the DU and the RU. In the ORAN, a specific implementation of step 402 may be: The O-CU-CP generates a second reference signal, and sends the second reference signal to the terminal by using the O-DU and the O-RU.

The second reference signal is a reference signal of m₂ ports, and the m₂ ports are from the m₁ ports, where m₂ is a positive integer less than or equal to m₁. In other words, a reference signal of the m₂ ports is a reference signal corresponding to some or all of the m₁ ports. In other words, a reference signal of the m₂ ports is a reuse of a reference signal of some or all ports from the reference signal of the m₁ ports.

As described in step 402, in this application, for ease of distinction and description, the base reference signal resource is defined as a time-frequency resource, to be distinguished from a spatial domain resource (for example, a port). In another implementation, the base reference signal resource may alternatively be defined as a resource in three dimensions: time domain, frequency domain, and spatial domain. In this case, a resource for transmitting the second reference signal may be a part or all of the first base reference signal resource. Step 406 may also be described as: receiving, on a second resource, a second reference signal, where the second resource is from the first base reference signal resource. Correspondingly, the terminal receives, on the second resource, the second reference signal.

It should be understood that, although both the first resource and the second resource are from the first base reference signal resource, the first resource and the second resource may include different quantities of ports. Therefore, the first resource and the second resource are distinguished and named as the first resource and the second resource. In addition, although the first resource and the second resource include different quantities of ports, time-frequency resources of both may be determined based on a resource pattern corresponding to the first base reference signal resource. Therefore, a mapping relationship between each port and the time-frequency resource remains unchanged. In addition, considering that the ports included in the second resource are from the ports included in the first resource, and that different ports multiplex the time-frequency resources, the time-frequency resource of the first resource may be the same as the time-frequency resource of the second resource.

In step 407, the terminal determines, based on the first channel estimation assistance information, second channel estimation assistance information.

The second channel estimation assistance information is used to estimate, based on a channel measurement result of the m₂ ports, a channel of k₂ ports, where m₂ is a positive integer less than or equal to m₁, and k₂ is a positive integer less than or equal to k₁ and greater than or equal to m₂. In this embodiment, because the m₂ ports are from the m₁ ports, and the k₂ ports are from the k₁ ports, the second channel estimation assistance information may be determined from the first channel estimation assistance information.

In conclusion, the following relationships may be obtained: m₂ ≤ m₁, k₂ ≤ k₁, and k₂ ≥ m₂. It is not difficult to learn that there is also a nesting relationship between the m₂ ports and the m₁ ports, and between the k₂ ports and the k₁ ports. The nesting relationship may be applied between the second channel estimation assistance information and the first channel estimation assistance information. Therefore, based on the nesting relationship, the second channel estimation assistance information may be obtained from the first channel estimation assistance information.

The terminal may determine, based on an index of a port corresponding to a channel that needs to be estimated in the k₁ ports and indexes of the m₂ ports in the m₁ ports, the second channel estimation assistance information from the first channel estimation assistance information.

For example, a quantity of ports corresponding to a channel that needs to be estimated is k₂, and the terminal may perform, based on indexes of the k₂ ports in the k₁ ports, column extraction on a matrix ${P}_{# 1}^{+}$ representing the first channel estimation assistance information, to extract columns corresponding to the k₂ ports from k₁ columns, to form a matrix (**P**_{sub}·**P**⁺(:,{k₁}))(:,{k₂}). **P**_{sub}·**P**⁺(:,{k₁}))(:,{k₂}) represents a matrix of dimensions m₁ × k₂, which is obtained by extracting k₂ columns from the k₁ columns of the matrix ${P}_{# 1}^{+}$ and combining the k₁ columns in an order of the k₁ columns in the matrix ${P}_{# 1}^{+}$.

The terminal may obtain, based on the indexes of the m₂ ports in the m₁ ports, a matrix **P**_{sub,1→2} of dimensions m₂ × m₁. The process in which the terminal obtains, based on the indexes of the m₂ ports in the m₁ ports, the matrix **P**_{sub,1→2} is similar to the process in which the terminal obtains, based on the indexes of the m₁ ports in the M ports, the matrix **P**_{sub} in step 403. For details, refer to the foregoing related descriptions. Details are not described again.

The terminal may obtain, based on the P_{sub,1→2}, a matrix ${P}_{# 2}^{+}$, where ${P}_{# 2}^{+} = {P}_{sub , 1 \to 2} ⋅ \left({P}_{sub}⋅{P}^{+}\left(:,\left\{{k}_{1}\right\}\right)\right) \left(:,\left\{{k}_{2}\right\}\right)$. The formula represents performing row extraction on the (**P**_{sub}·**P**⁺(:,{k₁}))(:,{k₂}) by using the **P**_{sub,1→2}, and the matrix ${P}_{# 2}^{+}$ obtained through extraction has dimensions of m₂ × k₂. The matrix ${P}_{# 2}^{+}$ is a matrix obtained by extracting m₂ row vectors from m₁ row vectors of the matrix (**P**_{sub}·**P**⁺(:,{k₁}))(:,{k₂}) and combining the m₂ row vectors in an order of the m₂ row vectors in the matrix (**P**_{sub}·P⁺(:,{k₁}))(:,{k₂}).

Therefore, the first channel estimation assistance information ${P}_{# 2}^{+}$ may be obtained.

The process of determining the second channel estimation assistance information from the first channel estimation assistance information is similar to the process of determining, by the terminal, the first channel estimation assistance information from the base channel estimation assistance information in step 403. For details, refer to related descriptions in step 403. Details are not described again. The indexes of the m₂ ports in the m₁ ports and the indexes of the k₂ ports in the k₁ ports may be indicated by the network device through signaling, or may be determined by the terminal according to an extraction rule indicated by the network device. For details, refer to the foregoing related descriptions with reference to the third information and the fourth information. Details are not described again.

In addition, because there is the nesting relationship between the m₁ ports and the M ports, and between the k₁ ports and the K ports, there is also a nesting relationship between the m₂ ports and the M ports, and between the k₂ ports and the K ports. The nesting relationship may be applied between the second channel estimation assistance information and the base channel estimation assistance information. Therefore, based on the nesting relationship, the second channel estimation assistance information may alternatively be obtained from the base channel estimation assistance information. The terminal may determine, based on indexes of the k₂ ports in the K ports and indexes of the m₂ ports in the M ports, the second channel estimation assistance information from the base channel estimation assistance information. The specific process is similar to the process of determining the first channel estimation assistance information from the base channel estimation assistance information. For brevity, details are not described herein again.

In step 408, the terminal determines, based on the second reference signal and the second channel estimation assistance information, second CSI, where the second CSI is used to determine a precoding matrix corresponding to the channel of the k₂ ports.

Similar to the first CSI, the second CSI may be a channel estimation result that indicates the channel of the k₂ ports, may be a PMI corresponding to the channel of the k₂ ports, or may be a channel measurement result that indicates a channel of the m₂ ports.

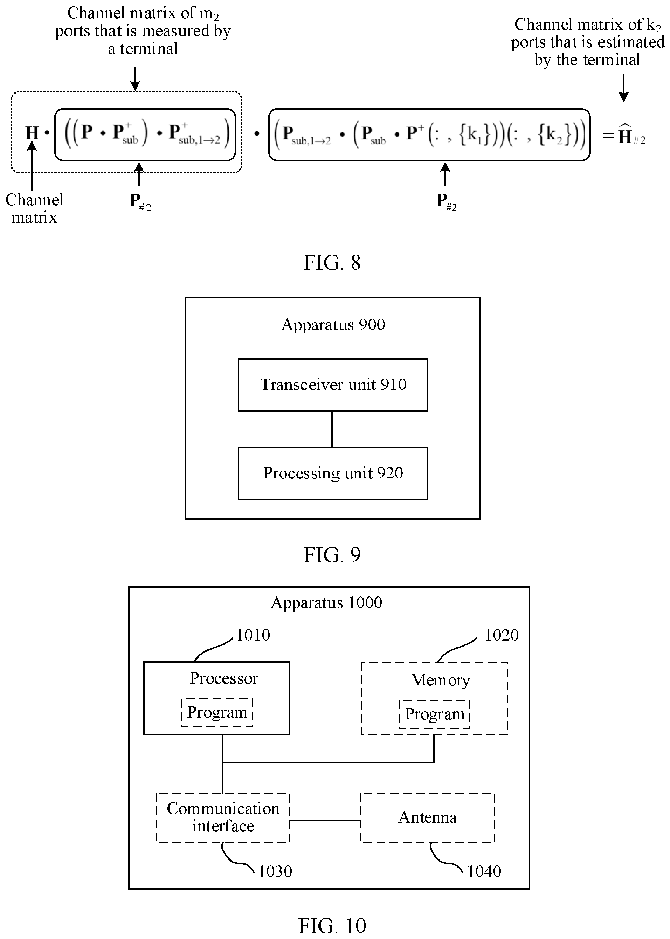

For ease of understanding, FIG. 8 shows the channel of the m₂ ports measured by the terminal and the channel of the k₂ ports estimated by the terminal. As shown in FIG. 8, the channel of the m₂ ports measured by the terminal based on the reference signal of the m₂ ports is $H ⋅ \left(\left(P⋅{P}_{sub}^{+}\right)⋅{P}_{sub , 1 \to 2}^{+}\right)$ , and the channel **Ĥ**_{#2} of the k₂ ports may be estimated based on the second channel estimation assistance information **P**_{sub,1→2}·(**P**_{sub}·**P**⁺(: , {k₁}))(: , {k₂}).

The process in which the terminal determines the second CSI is similar to the process in which the terminal determines, based on the first reference signal and the first channel estimation assistance information, the first CSI in step 404. For details, refer to the foregoing related descriptions. Details are not described again.

In step 409, the terminal sends the second CSI to the network device. Correspondingly, the network device receives the second CSI from the terminal.

Similar to step 405, in the RAN in which the CU, the DU, and the RU are deployed, a specific implementation of step 409 may be: The RU receives the second CSI, and forwards the received second CSI to the DU for processing. In the ORAN, a specific implementation of step 409 may be: The O-RU receives the second CSI, performs partial physical layer processing on the second CSI, and forwards the processed second CSI to the O-DU for processing.

A specific process of step 409 is similar to that of step 405. For details, refer to related descriptions of step 405. Details are not described again.

In this way, another round of channel estimation is completed.

In two or more adjacent rounds of channel estimations, the network device may use a same base reference signal resource to transmit reference signals. Therefore, the network device does not need to indicate, for each round of channel estimation, a transmission resource for a reference signal, thereby reducing signaling overhead. In addition, because a port for a reference signal transmitted in the next round is a subset of ports for reference signals transmitted in the previous round, the terminal may use the previous round of channel estimation as a reference for the next round of channel estimation. For example, the second channel estimation assistance information is determined based on the first channel estimation assistance information determined in the previous channel estimation process. This reduces a computation amount and improves execution efficiency compared with directly determining, based on the base channel estimation assistance information, the second channel estimation assistance information.

Different terminals may have different configurations, and different configurations may correspond to different capabilities, or computing capabilities. Therefore, the terminal may report the capability information of the terminal to the network device, so that the network device configures, for the terminal, a base reference signal resource adapted to a capability of the terminal.

Optionally, the method further includes step 410: The terminal sends capability information to the network device. The capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a resource pattern, and a port pattern that correspond to each allowed value of the maximum quantity of ports, or a retention duration supported for related information of each round of channel estimation. Correspondingly, the network device receives the capability information from the terminal.

After accessing the network device, the terminal may send the capability information to the network device, so that the network device configures, based on a capability of the terminal, a base reference signal resource. Alternatively, the terminal may send the capability information to the network device when a status of the terminal changes, for example, when a battery level is low (for example, lower than a threshold), or when a system version is updated, so that the network device determines whether a configuration of a base reference signal resource for the terminal needs to be adjusted. In a possible design, step 410 is performed before step 401 in this embodiment.

The following describes items in the capability information.

**The allowed value of a maximum quantity of ports supported for channel estimation by the terminal** is an allowed value of a maximum quantity of ports for a channel that can be estimated by the terminal. There may be one or more allowed values. For example, the capability information may indicate that allowed values of the maximum quantity of ports supported for channel estimation by the terminal include {128, 256, 512, 1024}. In other words, K may be 128, 256, 512, or 1024.

**The quantity of base reference signal resources that can be configured for each allowed value of the maximum quantity of ports for channel estimation** is a quantity of base reference signal resources that can be configured for the terminal for each allowed value. For example, if the capability information indicates that the quantity is 2, it indicates that two base reference signal resources can be configured for each allowed value. A configuration of each base reference signal resource includes one or more of the following: a resource pattern, a port pattern, and base channel estimation assistance information.

Based on **the allowed value of a maximum quantity of ports supported for channel estimation by the terminal** and the quantity of base reference signal resources that can be configured for each allowed value of the maximum quantity of ports for channel estimation, the network device may determine a quantity of base reference signal resources and specific base reference signal resources to be configured for the terminal, that is, may determine the T base reference signal resources configured based on the first information.

In an example, the capability information indicates that the allowed values of the maximum quantity of ports supported for channel estimation by the terminal include {128, 256, 512, 1024}, and two base reference signal resources can be configured for each allowed value. The network device may configure, for the terminal, a total of eight base reference signal resources: two base reference signal resources having a maximum quantity of supported ports of 128, two base reference signal resources having a maximum quantity of supported ports of 256, two base reference signal resources having a maximum quantity of supported ports of 512, and two base reference signal resources having a maximum quantity of supported ports of 1024.

**Whether the terminal pre-stores base channel estimation assistance information, a port pattern, and a resource pattern that correspond to each allowed value of the maximum quantity of ports** helps the network device determine whether base channel assistance information, a port pattern, and a resource pattern that correspond to each base reference signal resource need to be indicated to the terminal. If the terminal pre-stores one or more of the base channel estimation assistance information, the port pattern, or the resource pattern that corresponds to each allowed value of the maximum quantity of ports, when configuring the T base reference signal resources for the terminal via the first information, the network device may not need to indicate the corresponding items. For example, if the terminal pre-stores the base channel estimation assistance information corresponding to each allowed value of the maximum quantity of ports, when configuring the T base reference signal resources for the terminal via the first information, the network device may indicate the port pattern and the resource pattern that correspond to each base reference signal resource.

**Whether the terminal supports an extraction rule** is whether the terminal can extract some or all ports from the K ports. Whether the terminal supports an extraction rule may be used by the network device to determine whether the fourth information indicates the extraction rule, or indicates the indexes of the k₁ ports in the K ports.

**The retention duration supported by the terminal for related information of each round of channel estimation** is the maximum duration for which the terminal can locally retain the related information obtained from each round of channel estimation. The related information of channel estimation may include but is not limited to channel estimation assistance information. By retaining the related information obtained from each round of channel estimation, the terminal may compute, by using related information of a previous round of channel estimation, related information required for a next round of channel estimation. In this way, the related information required for the next round of channel estimation may be obtained by recursively applying the foregoing extraction rule.

The terminal indicates the capability information to the network device, so that the network device configures an appropriate base reference signal resource for the terminal. In addition, in a channel estimation process, an executor and an extraction rule for port extraction can be determined with reference to the computing capability of the terminal, thereby facilitating smooth channel estimation and achieving high spectral efficiency.

FIG. 9 to FIG. 12 are block diagrams of possible communication apparatuses according to embodiments of this application. These communication apparatuses may be configured to implement functions of the terminal or the network device in the foregoing method embodiments. Therefore, beneficial effect of the foregoing method embodiments can also be implemented. In embodiments of this application, the communication apparatus may be the terminal or the network device in the method embodiment shown in FIG. 4 or in FIG. 5a and FIG. 5b, may be a component (for example, a chip, a chip system, or a processor) configured in the terminal or the network device, or may be a logical module or software that can implement some or all functions of the terminal or the network device.

FIG. 9 shows a communication apparatus provided in this application. The communication apparatus 900 includes a transceiver unit 910 and a processing unit 920.

In a possible design, the communication apparatus 900 is configured to implement a function of the terminal in the method embodiment shown in FIG. 4 or in FIG. 5a and FIG. 5b. For example, the apparatus 900 may correspond to the terminal in FIG. 4 or in FIG. 5a and FIG. 5b.

For example, the transceiver unit 910 is configured to receive, on a first base reference signal resource, a first reference signal. The first base reference signal resource is used to transmit a reference signal of a maximum of M ports, and the reference signal of the M ports supports channel estimation for a maximum of K ports. The first reference signal is a reference signal of m₁ ports, and the m₁ ports are from the M ports. m₁ is less than M. M is less than or equal to K. m₁, M, and K are positive integers. The processing unit 920 is configured to determine, based on the first reference signal, first channel state information CSI. The first CSI corresponds to a channel of the k₁ ports. The first channel estimation assistance information is determined based on base channel estimation assistance information corresponding to the first base reference signal resource. The base channel estimation assistance information is used to estimate, based on a channel measurement result of the M ports, a channel of the K ports. The first channel estimation assistance information is used to estimate, based on a channel measurement result of the m₁ ports, the channel of the k₁ ports. The k₁ ports are from the K ports. k₁ is a positive integer greater than or equal to m₁ and less than or equal to K. The transceiver unit 910 is further configured to send the first CSI.

Optionally, the transceiver unit 910 is further configured to receive first information. The first information indicates one or more of the following of each of T base reference signal resources: a resource pattern, a port pattern, a maximum quantity of ports supported for channel estimation, and base channel estimation assistance information. A *t*^{th} base reference signal resource of the T base reference signal resources is used to transmit a reference signal of a maximum of M*ₜ* ports. The reference signal transmitted using the *t*^{th} base reference signal resource supports channel estimation for a maximum of K*ₜ* ports. K*ₜ* is a maximum quantity of ports supported for channel estimation by the *t*^{th} base reference signal resource. M*ₜ* is a positive integer less than or equal to K*ₜ*. *t* is a positive integer from 1 to T. The resource pattern of the *t*^{th} base reference signal resource indicates a mapping relationship between a reference signal of each of the M*ₜ* ports and a time-frequency resource. The port pattern of the *t*^{th} base reference signal resource indicates indexes of the M*ₜ* ports in the K*ₜ* ports. The base channel estimation assistance information of the *t*^{th} base reference signal resource is used to estimate, based on a channel measurement result of the M*ₜ* ports, a channel of the K*ₜ* ports.

Optionally, T is greater than 1, and any two of the T base reference signal resources satisfy: Maximum quantities of ports for transmitting reference signals are different, and/or maximum quantities of ports supported for channel estimation are different.

Optionally, the transceiver unit 910 is further configured to receive second information. The second information indicates an identifier of the first base reference signal resource of the T base reference signal resources.

Optionally, the first CSI is a PMI corresponding to the channel of the k₁ ports, or the first CSI is a channel estimation result that indicates the channel of the k₁ ports.

Optionally, the processing unit 920 is further configured to determine, based on indexes of the m₁ ports in the M ports and indexes of the k₁ ports in the K ports, the first channel estimation assistance information from the base channel estimation assistance information corresponding to the first base reference signal resource.

Optionally, the transceiver unit 910 is further configured to receive third information. The third information indicates the indexes of the k₁ ports in the K ports or an extraction rule for extracting the k₁ ports from the K ports.

Optionally, the transceiver unit 910 is further configured to receive fourth information. The fourth information indicates the indexes of the m₁ ports in the M ports or an extraction rule for extracting the m₁ ports from the M ports.

Optionally, the transceiver unit 910 is further configured to receive, on the first base reference signal resource, a second reference signal. The second reference signal is a reference signal of m₂ ports. The m₂ ports are from the m₁ ports. m₂ is a positive integer less than m₁. The processing unit 920 is further configured to determine, based on the second reference signal and second channel estimation assistance information, second CSI. The second CSI corresponds to a channel of k₂ ports. The second channel estimation assistance information is used to estimate, based on a channel measurement result of the m₂ ports, the channel of the k₂ ports. The k₂ ports are from the k₁ ports. k₂ is a positive integer less than or equal to k₁ and greater than or equal to m₂. The transceiver unit 910 is further configured to send the second CSI.

Optionally, the transceiver unit 910 is further configured to send capability information of a terminal. The capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a resource pattern, and a port pattern that correspond to each allowed value of the maximum quantity of ports, or a retention duration supported by the terminal for related information of each round of channel estimation. The extraction rule is used for extracting some or all ports from a plurality of ports.

For more detailed descriptions of the transceiver unit 910 and the processing unit 920, directly refer to related descriptions in the method embodiment shown in FIG. 4 or in FIG. 5a and FIG. 5b. Details are not described herein again.

In another possible design, the communication apparatus 900 is configured to implement a function of the network device in the method embodiment shown in FIG. 4 or in FIG. 5a and FIG. 5b. For example, the apparatus 900 may correspond to the network device in FIG. 4 or in FIG. 5a and FIG. 5b.

For example, the transceiver unit 910 is configured to send, on a first base reference signal resource, a first reference signal. The first base reference signal resource is used to transmit a reference signal of a maximum of M ports. The reference signal of the M ports supports channel estimation for a maximum of K ports. The first reference signal is a reference signal of m₁ ports. The m₁ ports are from the M ports. m₁ is less than M. M is less than or equal to K. m₁, M, and K are positive integers. The transceiver unit 910 is further configured to receive first channel state information CSI. The first CSI is obtained based on the first reference signal. The first CSI corresponds to a channel of k₁ ports. The k₁ ports are from the K ports. k₁ is a positive integer greater than or equal to m₁ and less than or equal to K.

Optionally, the transceiver unit 910 is further configured to send first information. The first information indicates one or more of the following of each of T base reference signal resources: a resource pattern, a port pattern, a maximum quantity of ports supported for channel estimation, and base channel estimation assistance information. A *t*^{th} base reference signal resource of the T base reference signal resources is used to transmit a reference signal of a maximum of M*ₜ* ports. The reference signal transmitted using the *t*^{th} base reference signal resource supports channel estimation for a maximum of K*ₜ* ports. K*ₜ* is a maximum quantity of ports supported for channel estimation by the *t*^{th} base reference signal resource. M*ₜ* is a positive integer less than or equal to K*ₜ*. *t* is a positive integer from 1 to T. The resource pattern of the *t*^{th} base reference signal resource indicates a mapping relationship between a reference signal of each of the M*ₜ* ports and a time-frequency resource. The base channel estimation assistance information of the *t*^{th} base reference signal resource is used to estimate, based on a channel measurement result of the M*ₜ* ports, a channel of the K*ₜ* ports.

Optionally, T is greater than 1, and at least two of the T base reference signal resources satisfy: Maximum quantities of ports for transmitting reference signals are different, and/or maximum quantities of ports supported for channel estimation are different.

Optionally, the transceiver unit 910 is further configured to send second information. The second information indicates an identifier of the first base reference signal resource of the T base reference signal resources.

Optionally, the first CSI is a PMI corresponding to the channel of the k₁ ports, or the first CSI is a channel estimation result that indicates the channel of the k₁ ports.

Optionally, the transceiver unit 910 is further configured to send third information. The third information indicates indexes of the k₁ ports in the K ports or an extraction rule for extracting the k₁ ports from the K ports.

Optionally, the transceiver unit 910 is further configured to send fourth information. The fourth information indicates indexes of the m₁ ports in the M ports or an extraction rule for extracting the m₁ ports from the M ports.

Optionally, the transceiver unit 910 is further configured to send, on the first base reference signal resource, a second reference signal. The second reference signal is a reference signal of m₂ ports. The m₂ ports are from the m₁ ports. m₂ is a positive integer less than m₁. The transceiver unit 910 is further configured to receive second CSI. The second CSI is obtained based on the second reference signal. The second CSI corresponds to a channel of k₂ ports. The k₁ ports are from the k₁ ports. k₂ is a positive integer less than or equal to k₁ and greater than or equal to m₂.

Optionally, the transceiver unit 910 is further configured to receive capability information of a terminal. The capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a resource pattern, and a port pattern that correspond to each allowed value of the maximum quantity of ports, or a retention duration supported by the terminal for related information of each round of channel estimation. The extraction rule is used for extracting some or all ports from a plurality of ports.

For more detailed descriptions of the transceiver unit 910 and the processing unit 920, directly refer to related descriptions in the method embodiment shown in FIG. 4 or in FIG. 5a and FIG. 5b. Details are not described herein again.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation on a terminal side or a network device side in the foregoing method. A component that is in the communication module and that is configured to implement a receiving function may be considered as a receiving unit, and a component that is in the communication module and that is configured to implement a sending function may be considered as a sending unit. In other words, the transceiver unit includes a receiving unit and a sending unit.

It should be further noted that in a possible design, the transceiver unit and/or the processing unit may be implemented via a virtual module. For example, the processing unit may be implemented via a software functional unit or a virtual apparatus, and the transceiver unit may be implemented via a software function or a virtual apparatus. In another possible design, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this embodiment of this application, division into the units is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

FIG. 10 shows another communication apparatus provided in this application. The communication apparatus 1000 includes a processor 1010. The processor 1010 may be configured to execute a computer program or instructions in a memory, to implement steps performed by the terminal or steps performed by the network device in the foregoing method embodiment shown in FIG. 4 or in FIG. 5a and FIG. 5b.

Optionally, the apparatus 1000 further includes a communication interface 1030. The processor 1010 and the communication interface 1030 are coupled to each other. It may be understood that the communication interface 1030 may be a transceiver or an input/output interface. Optionally, the apparatus 1000 further includes an antenna 1040, and the communication interface 1030 may implement a transceiver function of the communication apparatus 1000 by using the antenna 1040.

Optionally, the communication apparatus 1000 may further include a memory 1020, configured to store instructions executed by the processor 1010, or store input data required by the processor 1010 to run instructions, or store data generated after the processor 1010 runs instructions.

When the communication apparatus 1000 is configured to implement the method shown in FIG. 4 or in FIG. 5a and FIG. 5b, the processor 1010 is configured to perform a function of the processing unit, and the communication interface 1030 is configured to perform a function of the receiving unit and/or the sending unit. Whether the communication interface 1030 and the antenna 1040 are configured to perform sending or receiving may be specifically determined based on whether the communication interface 1030 and the antenna 1040 are configured to perform a sending action or a receiving action in a solution performed by the communication apparatus 1000.

When the communication apparatus 1000 is a chip used in a terminal, the chip implements a function of the terminal in the foregoing method embodiment. The chip of the terminal receives a signal from another module (for example, a radio frequency module or an antenna) in the terminal, where the signal may be sent by a network device to the terminal; or the chip of the terminal sends a signal to another module (for example, a radio frequency module or an antenna) in the terminal, where the signal may be sent by the terminal to a network device.

When the communication apparatus 1000 is a chip used in a network device, the chip implements a function of the network device in the foregoing method embodiment. The chip of the network device receives a signal from another module (for example, a radio frequency module or an antenna) in the network device, where the signal may be sent by a terminal to the network device; or the chip of the network device sends a signal to another module (for example, a radio frequency module or an antenna) in the network device, where the signal may be sent by the network device to a terminal.

It may be understood that when the communication apparatus 1000 is a terminal or a network device, the communication interface 1030 may be a transceiver, and may specifically include a transmitter and a receiver. The transmitter is configured to send a signal, and the receiver is configured to receive a signal. When the communication apparatus 1000 is a chip used in a terminal or a network device, the communication interface 1030 may be an input/output circuit, a bus, a module, a pin, or another type of communication interface. An input circuit in the input/output circuit may be configured to perform receiving, and an output interface may be configured to perform sending.

It should be understood that, in the communication apparatus 1000 shown in FIG. 10, the processor 1010 may correspond to the processing unit 920 in the communication apparatus 900, and the communication interface 1030 and the antenna 1040 may correspond to the transceiver unit 910 in the communication apparatus 900.

It should be further understood that the coupling in embodiments of this application is an indirect coupling or a communication connection between apparatuses, units, or modules, may be in an electrical, mechanical, or another form, and is used for information exchange between the apparatuses, the units, or the modules. The processor 1010 and the memory 1020 may operate cooperatively. In this embodiment of this application, a specific connection medium between the processor 1010 and the communication interface 1030, between the processor 1010 and the memory 1020, and between the communication interface 1030 and the antenna 1040 is not limited.

Optionally, the processor 1010, the communication interface 1030, and the memory 1020 are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

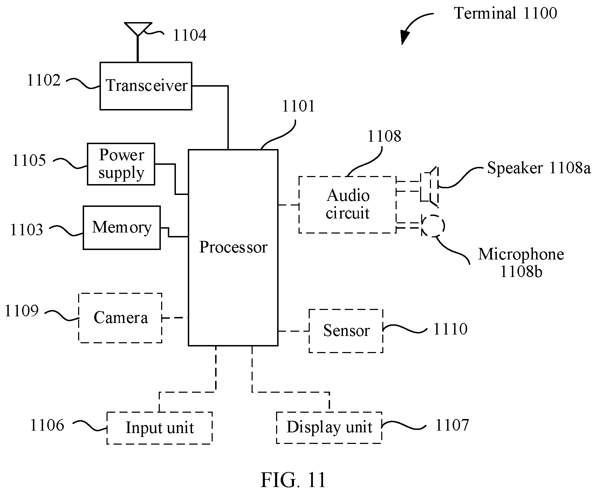

FIG. 11 is a diagram of a structure of a terminal according to an embodiment of this application. As shown in FIG. 11, the terminal 1100 may be used in the system shown in FIG. 1, to perform a function of the terminal in the foregoing method embodiments. As shown in the figure, the terminal 1100 includes a processor 1101 and a transceiver 1102. Optionally, the terminal 1100 further includes a memory 1103. The processor 1101, the transceiver 1102, and the memory 1103 may communicate with each other through an internal connection path, to transfer a control signal and/or a data signal. The memory 1103 is configured to store a computer program. The processor 1101 is configured to invoke the computer program from the memory 1103 and run the computer program, to control the transceiver 1102 to send and receive a signal. Optionally, the terminal 1100 may further include an antenna 1104, configured to send, via a radio signal, uplink data or uplink control signaling output by the transceiver 1102.

The processor 1101 and the memory 1103 may be integrated into one processing apparatus. The processor 1101 is configured to execute program code stored in the memory 1103, to implement the foregoing functions. During specific implementation, the memory 1103 may alternatively be integrated into the processor 1101, or may be independent of the processor 1101. The processor 1101 may correspond to the processing unit in FIG. 9 or the processor in FIG. 10.

The transceiver 1102 may correspond to the transceiver unit in FIG. 9 or the communication interface in FIG. 10, and may also be referred to as a transceiver unit. The transceiver 1102 may include a receiver (which is also referred to as a receiver machine or a receiver circuit) and a transmitter (which is also referred to as a transmitter machine or a transmitter circuit). The receiver is configured to receive a signal, and the transmitter machine is configured to transmit a signal.

It should be understood that the terminal 1100 shown in FIG. 11 can implement processes related to the terminal in the method embodiment shown in FIG. 4 or in FIG. 5a and FIG. 5b. Operations and/or functions of modules in the terminal 1100 are respectively used to implement corresponding procedures in the foregoing method embodiments. For details, refer to the descriptions in the foregoing method embodiments. To avoid repetition, detailed descriptions are properly omitted herein.

The processor 1101 may be configured to perform an action that is implemented inside the terminal and that is described in the foregoing method embodiments. The transceiver 1102 may be configured to perform actions of the terminal sending to or receiving from the network device as described in the foregoing method embodiments. For details, refer to the descriptions in the foregoing method embodiments. Details are not described herein again.

Optionally, the terminal 1100 may further include a power supply 1105, configured to supply power to various components or circuits in the terminal. In this embodiment of this application, a rectifier may be connected between the power supply 1105 and the antenna 1104. After an electromagnetic wave signal is received by the antenna 1104 and converted into an alternating current signal, the alternating current signal may be further converted into a direct current signal by using the rectifier, and then the direct current signal is output to the power supply 1105.

In addition, to improve functions of the terminal, the terminal 1100 may further include one or more of an input unit 1106, a display unit 1107, an audio circuit 1108, a camera 1109, a sensor 1110, and the like. The audio circuit may further include a speaker 1108a, a microphone 1108b, and the like.

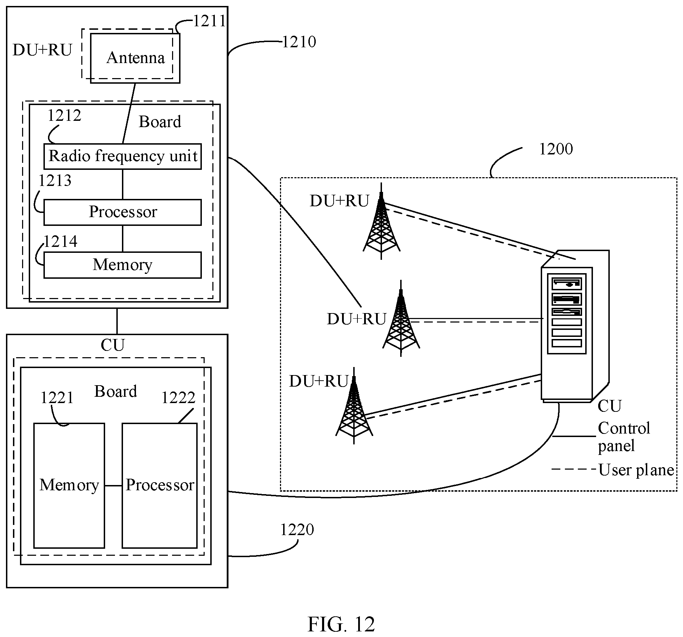

FIG. 12 is a diagram of a structure of a network device according to an embodiment of this application. For example, FIG. 12 may be a diagram of a structure of a base station. The base station 1200 shown in FIG. 12 may be used in the system shown in FIG. 1, to perform a function of the network device in the foregoing method embodiments. As shown in the figure, the base station 1200 may include one or more of the following: one or more (DU+RU)s 1210 and one or more CUs 1220. The CU 1220 may communicate with a next generation core network (next generation core, NG core). The DU may include at least one antenna 1211, at least one radio frequency unit 1212, at least one processor 1213, and at least one memory 1214. The DU is mainly configured to receive and send radio frequency signals, convert a radio frequency signal and a baseband signal, and perform some baseband processing. The CU 1220 may include at least one processor 1222 and at least one memory 1221. The CU 1220 and the DU may communicate with each other through an interface. A control plane (control plane, CP) interface may be Fs-C, for example, F1-C, and a user plane (user plane, UP) interface may be Fs-U, for example, F1-U. The DU and the RU may cooperate to jointly implement a function of a physical (physical, PHY) layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

The CU 1220 is mainly configured to perform baseband processing, control a base station, and the like. The DU and the CU 1220 may be physically disposed together, or may be physically disposed separately. That is, the base station is a distributed base station. The CU 1220 is a control center of the base station, may correspond to the processing unit in FIG. 9 or the processor in FIG. 10, may also be referred to as a processing unit, and is mainly configured to complete a baseband processing function. For example, the CU 1220 may be configured to control the base station to perform an operation procedure related to the access network device in the foregoing method embodiments.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of a protocol layer, for example, an RLC layer and a MAC layer, below the PDCP layer are set on the DU. For another example, the CU implements functions of an RRC layer and a PDCP layer, and the DU implements functions of an RLC layer, a MAC layer, and a PHY layer.

In addition, optionally, the base station 1200 may include one or more radio frequency units (RU), one or more DUs, and one or more CUs. The DU may include at least one processor 1213 and at least one memory 1214, the RU may include at least one antenna 1211 and at least one radio frequency unit 1212, and the CU may include at least one processor 1222 and at least one memory 1221.

In an instance, the CU 1220 may include one or more boards. A plurality of boards may jointly support a radio access network (for example, a 5G network) with a single access standard, or may separately support radio access networks (for example, an LTE network, a 5G network, or another network) with different access standards. The memory 1221 and the processor 1222 may serve one or more boards. In other words, a memory and a processor may be disposed on each board. Alternatively, a plurality of boards may share a same memory and a same processor. In addition, a necessary circuit may be further disposed on each board. The DU may include one or more boards. A plurality of boards may jointly support a radio access network (for example, a 5G network) with a single access standard, or may separately support radio access networks (for example, an LTE network, a 5G network, or another network) with different access standards. The memory 1214 and the processor 1213 may serve the one or more boards. In other words, a memory and a processor may be disposed on each board. Alternatively, a plurality of boards may share a same memory and a same processor. In addition, a necessary circuit may be further disposed on each board.

It should be understood that the base station 1200 shown in FIG. 12 can implement processes related to the network device in the method embodiment shown in FIG. 4 or in FIG. 5a and FIG. 5b. Operations and/or functions of modules in the base station 1200 are respectively used to implement corresponding procedures in the foregoing method embodiments. For details, refer to the descriptions in the foregoing method embodiments. To avoid repetition, detailed descriptions are properly omitted herein.

The BBU 1220 may be configured to perform an action that is implemented inside the network device and that is described in the foregoing method embodiments. The RRU 12910 may be configured to perform actions of the network device sending to or receiving from the terminal as described in the foregoing method embodiments. For details, refer to the descriptions in the foregoing method embodiments. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a communication system. The communication system includes the foregoing network device and terminal.

This application further provides a computer program product. The computer program product includes a computer program (which may also be referred to as code or instructions). When the computer program is run, a computer is caused to perform the method performed by the terminal or the method performed by the network device in the embodiment shown in FIG. 4 or in FIG. 5a and FIG. 5b.

This application further provides a computer-readable storage medium. The computer-readable storage medium stores a computer program (which may also be referred to as code or instructions). When the computer program is run, a computer is caused to perform the method performed by the terminal or the method performed by the network device in the embodiment shown in FIG. 4 or in FIG. 5a and FIG. 5b.

Terms such as "unit" and "module" used in this specification may represent computerrelated entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

When functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in the form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, on a first base reference signal resource, a first reference signal, wherein the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than M, M is less than or equal to K, and m₁, M, and K are positive integers;
determining, based on the first reference signal and first channel estimation assistance information, first channel state information CSI, wherein the first CSI corresponds to a channel of k₁ ports, the first channel estimation assistance information is determined based on base channel estimation assistance information corresponding to the first base reference signal resource, the base channel estimation assistance information is used to estimate, based on a channel measurement result of the M ports, a channel of the K ports, the first channel estimation assistance information is used to estimate, based on a channel measurement result of the m₁ ports, the channel of the k₁ ports, the k₁ ports are from the K ports, and k₁ is a positive integer greater than or equal to m₁ and less than or equal to K; and
sending the first CSI.

2. The method according to claim 1, wherein the first base reference signal resource is one of T base reference signal resources; and
before receiving, on the first base reference signal resource, the first reference signal, the method further comprises:
receiving first information, wherein the first information indicates one or more of the following of each of the T base reference signal resources: a resource pattern, a port pattern, a maximum quantity of ports supported for channel estimation, and base channel estimation assistance information, wherein
a *t*^{th} base reference signal resource of the T base reference signal resources is used to transmit a reference signal of a maximum of M*ₜ* ports, the reference signal transmitted using the *t*^{th} base reference signal resource supports channel estimation for a maximum of K*ₜ* ports, K*ₜ* is a maximum quantity of ports supported for channel estimation by the *t*^{th} base reference signal resource, M*ₜ* is a positive integer less than or equal to K*ₜ*, and *t* is a positive integer from 1 to T; the resource pattern of the *t*^{th} base reference signal resource indicates a mapping relationship between a reference signal of each of the M*ₜ* ports and a time-frequency resource, the port pattern of the *t*^{th} base reference signal resource indicates indexes of the M*ₜ* ports in the K*ₜ* ports, and the base channel estimation assistance information of the *t*^{th} base reference signal resource is used to estimate, based on a channel measurement result of the M*ₜ* ports, a channel of the K*ₜ* ports.

3. The method according to claim 2, wherein T is greater than 1, and any two of the T base reference signal resources satisfy: Maximum quantities of ports for transmitting reference signals are different, and/or maximum quantities of ports supported for channel estimation are different.

4. The method according to claim 3, wherein before receiving, on the first base reference signal resource, the first reference signal, the method further comprises:
receiving second information, wherein the second information indicates an identifier of the first base reference signal resource of the T base reference signal resources.

5. The method according to any one of claims 1 to 4, wherein the first CSI is a precoding matrix indicator PMI corresponding to the channel of the k₁ ports, or the first CSI is a channel estimation result that indicates the channel of the k₁ ports.

6. The method according to claim 5, wherein determining, based on the base channel estimation assistance information corresponding to the first base reference signal resource, the first channel estimation assistance information comprises:
determining, based on indexes of the m₁ ports in the M ports and indexes of the k₁ ports in the K ports, the first channel estimation assistance information from the base channel estimation assistance information corresponding to the first base reference signal resource.

7. The method according to any one of claims 1 to 6, wherein the method further comprises:
receiving third information, wherein the third information indicates the indexes of the k₁ ports in the K ports.

8. The method according to any one of claims 1 to 7, wherein the method further comprises:
receiving fourth information, wherein the fourth information indicates the indexes of the m₁ ports in the M ports, or an extraction rule for extracting the m₁ ports from the M ports.

9. The method according to any one of claims 1 to 8, wherein the method further comprises:
receiving, on the first base reference signal resource, a second reference signal, wherein the second reference signal is a reference signal of m₂ ports, the m₂ ports are from the m₁ ports, and m₂ is a positive integer less than or equal to m₁;
determining, based on the second reference signal and second channel estimation assistance information, second CSI, wherein the second CSI corresponds to a channel of k₂ ports, the second channel estimation assistance information is used to estimate, based on a channel measurement result of the m₂ ports, the channel of the k₂ ports, the k₂ ports are from the k₁ ports, and k₂ is a positive integer less than or equal to k₁ and greater than or equal to m₂; and
sending the second CSI.

10. The method according to any one of claims 1 to 9, wherein the method further comprises:
sending capability information of a terminal, wherein the capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a resource pattern, and a port pattern that correspond to each allowed value of the maximum quantity of ports, or a retention duration supported by the terminal for related information of each round of channel estimation, and the extraction rule is used for extracting some or all ports from a plurality of ports.

11. A communication method, comprising:
sending, on a first base reference signal resource, a first reference signal, wherein the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than M, M is less than or equal to K, and m₁, M, and K are positive integers; and
receiving first channel state information CSI, wherein the first CSI is obtained based on the first reference signal, the first CSI corresponds to a channel of k₁ ports, the k₁ ports are from the K ports, and k₁ is a positive integer greater than or equal to m₁ and less than or equal to K.

12. The method according to claim 11, wherein the first base reference signal resource is one of T base reference signal resources, and before sending, on the first base reference signal resource, the first reference signal, the method further comprises:
sending first information, wherein the first information indicates one or more of the following of each of the T base reference signal resources: a resource pattern, a port pattern, a maximum quantity of ports supported for channel estimation, and base channel estimation assistance information, wherein
a *t*^{th} base reference signal resource of the T base reference signal resources is used to transmit a reference signal of a maximum of M*ₜ* ports, the reference signal transmitted using the *t*^{th} base reference signal resource supports channel estimation for a maximum of K*ₜ* ports, K*ₜ* is a maximum quantity of ports supported for channel estimation by the *t*^{th} base reference signal resource, M*ₜ* is a positive integer less than or equal to K*ₜ*, and *t* is a positive integer from 1 to T; the resource pattern of the *t*^{th} base reference signal resource indicates a mapping relationship between a reference signal of each of the M*ₜ* ports and a time-frequency resource, and the base channel estimation assistance information of the *t*^{th} base reference signal resource is used to estimate, based on a channel measurement result of the M*ₜ* ports, a channel of the K*ₜ* ports.

13. The method according to claim 11 or 12, wherein T is greater than 1, and at least two of the T base reference signal resources satisfy: Maximum quantities of ports for transmitting reference signals are different, and/or maximum quantities of ports supported for channel estimation are different.

14. The method according to claim 13, wherein before sending, on the first base reference signal resource, the first reference signal, the method further comprises:
sending second information, wherein the second information indicates an identifier of the first base reference signal resource of the T base reference signal resources.

15. The method according to any one of claims 11 to 14, wherein the first CSI is a precoding matrix indicator PMI corresponding to the channel of the k₁ ports, or the first CSI is a channel estimation result that indicates the channel of the k₁ ports.

16. The method according to any one of claims 11 to 15, wherein the method further comprises:
sending third information, wherein the third information indicates indexes of the k₁ ports in the K ports.

17. The method according to any one of claims 11 to 16, wherein the method further comprises:
sending fourth information, wherein the fourth information indicates indexes of the m₁ ports in the M ports, or an extraction rule for extracting the m₁ ports from the M ports.

18. The method according to any one of claims 11 to 17, wherein the method further comprises:
sending, on the first base reference signal resource, a second reference signal, wherein the second reference signal is a reference signal of m₂ ports, the m₂ ports are from the m₁ ports, and m₂ is a positive integer less than or equal to m₁; and
receiving second CSI, wherein the second CSI is obtained based on the second reference signal, the second CSI corresponds to a channel of k₂ ports, the k₁ ports are from the k₁ ports, and k₂ is a positive integer less than or equal to k₁ and greater than or equal to m₂.

19. The method according to any one of claims 11 to 18, wherein the method further comprises:
receiving capability information of a terminal, wherein the capability information indicates one or more of the following: an allowed value of a maximum quantity of ports supported for channel estimation by the terminal, a quantity of base reference signal resources that can be configured for each allowed value of the maximum quantity of ports for channel estimation, whether the terminal supports an extraction rule, whether the terminal pre-stores base channel estimation assistance information, a resource pattern, and a port pattern that correspond to each allowed value of the maximum quantity of ports, or a retention duration supported by the terminal for related information of each round of channel estimation, and the extraction rule is used for extracting some or all ports from a plurality of ports.

20. A communication apparatus, comprising a module configured to implement the method according to any one of claims 1 to 10, or comprising a module configured to implement the method according to any one of claims 11 to 19.

21. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement, by using a logic circuit or by executing code instructions, the method according to any one of claims 1 to 10 or the method according to any one of claims 11 to 19.

22. A computer-readable storage medium, wherein the computer-readable storage medium stores a computer program, and when the computer program is executed by a processor, the method according to any one of claims 1 to 10 is performed, or the method according to any one of claims 11 to 19 is performed.

23. A computer program product, comprising a computer program, wherein when the computer program is run, the method according to any one of claims 1 to 10 is performed, or the method according to any one of claims 11 to 19 is performed.
